(19) **Europäisches Patentamt / European Patent Office / Office européen des brevets**

(11) **EP 4 145 745 A1**

(12) **EUROPEAN PATENT APPLICATION**
published in accordance with Art. 153(4) EPC

(43) Date of publication:
**08.03.2023 Bulletin 2023/10**

(21) Application number: **21807788.1**

(22) Date of filing: **14.05.2021**

(51) International Patent Classification (IPC):
**H04L 5/00** (2006.01)

(52) Cooperative Patent Classification (CPC):
**H04L 5/00; H04W 72/04; H04W 72/12**

(86) International application number:
**PCT/CN2021/093766**

(87) International publication number:
**WO 2021/233217 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2020 CN 202010421049**

(71) Applicant: **Huawei Technologies Co., Ltd.**
**Longgang District,**
**Shenzhen,**
**Guangdong 518129 (CN)**

(72) Inventors:
• **FENG, Shulan**
  **Shenzhen, Guangdong 518129 (CN)**
• **CHEN, Yu**
  **Shenzhen, Guangdong 518129 (CN)**
• **CHANG, Junren**
  **Shenzhen, Guangdong 518129 (CN)**

(74) Representative: **Maiwald GmbH**
**Engineering**
**Elisenhof**
**Elisenstrasse 3**
**80335 München (DE)**

(54) **CAPABILITY INFORMATION REPORTING METHOD AND APPARATUS**

(57)     Embodiments of this application disclose a capability information reporting method, applied to a communication system. The method includes: A first device determines capability information of the first device. The capability information indicates a capability of the first device for supporting a maximum aggregated spectrum in a first range. The first device sends the capability information. In embodiments of this application, the first device sends the capability information including the maximum aggregated spectrum, thereby reducing costs of the first device.

FIG. 2

## Description

This application claims priority to Chinese Patent Application No. 202010421049.X, filed with China National Intellectual Property Administration on May 18, 2020 and entitled "CAPABILITY INFORMATION REPORTING METHOD AND APPARATUS", which is incorporated herein by reference in its entirety.

## TECHNICAL FIELD

Embodiments of this application relate to the field of communication technologies, and in particular, to a capability information reporting method and apparatus.

## BACKGROUND

Carrier aggregation (carrier aggregation, CA) is a technology for increasing a transmission bandwidth. Carrier aggregation is introduced into a long term evolution (long term evolution, LTE) system, a long term evolution-advanced (long term evolution-advanced, LTE-A) system, and a new radio (new radio, NR) system. Therefore, one terminal device can simultaneously perform data transmission on a plurality of carriers.

In a conventional technology, capability information of UE is determined based on a quantity of carriers supported by the user equipment (user equipment, UE) and a maximum channel bandwidth supported by each carrier. Capabilities of the carriers are independent of each other, and a large amount of redundant information exists in a design of the UE. In a carrier aggregation scenario, when the UE reports carrier aggregation capability information, according to an existing protocol specification, a corresponding processing capability is designed for UE based on the maximum bandwidth supported by each carrier (during carrier aggregation, a carrier participating in aggregation is also referred to as a component carrier (component carrier, CC)) in a band (band), and processing capability information is reported. However, in an actual data transmission process, a bandwidth scheduled for a single carrier usually cannot reach the maximum bandwidth supported by the component carrier. This causes an unnecessary waste of a UE capability, and increases design costs of the UE.

## SUMMARY

Embodiments of this application provide a capability information reporting method, which may be applied to a communication system, for example, a long term evolution LTE system, a new radio NR system, an evolved universal terrestrial radio access-new radio dual connectivity (E-UTRA-NR dual connectivity, EN DC) communication system, or an ultra-reliable low-latency communication (ultra-reliable low-latency communication, URLLC) system, a vehicle-to-everything (vehicle-to-everything, V2X) communication system, a long term evolutionvehicle (LTE-vehicle, LTE-V) communication system, a new radio-vehicle (NR-vehicle, NR-V) communication system, a vehicle-to-vehicle (vehicle-to-vehicle, V2V) communication system, an Internet of vehicles communication system, a massive machine type communication (massive machine type communication, mMTC) system, an Internet of Things (Internet of Things, IoT) communication system, a long term evolution-machine-to-machine (LTE-machine-to-machine, LTE-M) communication system, a machine-to-machine (machine-to-machine, M2M) communication system, and a device-to-device (device-to-device, D2D) communication system. The method provided in embodiments of this application is used to properly schedule a resource based on capability information including a maximum aggregated spectrum in capability information when a scheduled node sends the capability information to a scheduling node, to reduce a waste of a capability of a terminal device and reduce costs of the terminal device.

According to a first aspect, an embodiment of this application provides a capability information reporting method. The method includes: A first device determines capability information of the first device. The capability information of the first device indicates a capability of the first device for supporting a maximum aggregated spectrum in a first range. The first device sends the capability information to a second device.

In this application, when the first device reports the capability information to the second device, capability information of the first device for supporting the maximum aggregated spectrum in the first range is carried in the capability information, so that a new capability information reporting manner is provided. In this new capability information reporting manner, the first device does not need to perform reporting in a reporting manner of a maximum bandwidth corresponding to each component carrier supported by the first device. Therefore, when a capability supported by the first device is designed, design may not need to be performed in the manner in which each component carrier corresponds to the maximum bandwidth. This reduces corresponding design costs of the first device, reduces a waste of a capability of a terminal device, and makes resource scheduling more appropriate.

Optionally, in a possible implementation, the maximum aggregated spectrum is less than a first bandwidth. The first bandwidth is a sum of maximum bandwidths of all aggregated carriers supported by the first device in the first range.

In the method provided in this embodiment of this application, the maximum aggregated spectrum supported by the first device is less than the sum of the maximum bandwidths of all the aggregated carriers in the first range, so that when the capability supported by the first device is designed, corresponding capabilities do not need to be designed based on the maximum bandwidths for all the aggregated carriers supported by the first device. However, a higher capability supported by the first device indicates higher corresponding costs. Therefore, reporting is performed by using the capability information reporting method provided in this embodiment of this application, so that design of excessive capabilities can be avoided in a design phase of the first device. This helps reduce costs of the first device.

Optionally, in a possible implementation, the capability information further includes first indication information. The first indication information indicates the first range supported by the first device.

In this application, when the capability information further includes the indication information indicating the first range supported by the first device, the terminal device may determine the first range based on different application scenarios and/or costs and/or functions, and the like, thereby providing better implementation flexibility.

Optionally, in a possible implementation, the capability information further includes second indication information. The second indication information indicates a minimum guaranteed bandwidth of a carrier supported by the first device in the first range.

In this application, when the capability information includes the minimum guaranteed bandwidth of at least one carrier supported by the first device in the first range, the second device may reserve the minimum guaranteed bandwidth for the at least one carrier when scheduling a resource based on the capability information, so that when the terminal capability is shared, a basic communication function of the at least one carrier can be ensured.

Optionally, in a possible implementation, the capability information further includes third indication information. The third indication information indicates that the first device supports scheduling of a plurality of resource units in the first range. A sum of the plurality of resource units is less than or equal to the maximum aggregated spectrum.

In this application, when the capability information further includes the third indication information indicating that the first device supports scheduling of the plurality of resource units in the first range, implementability of this solution is improved, and implementation complexity caused by an extremely small resource unit is avoided.

Optionally, in a possible implementation, at least one of all carriers supported by the first device in the first range includes non-contiguous resource units.

In this application, when the first device supports scheduling of carriers of the non-contiguous resource units, a frequency diversity gain may be used to improve spectrum resource utilization.

Optionally, in a possible implementation, after the first device sends the capability information, the first device receives first scheduling information sent by the second device. The first scheduling information determines a first frequency domain resource in the first range. The first frequency domain resource is used for data transmission of the first device. The first frequency domain resource is less than or equal to the maximum aggregated spectrum supported by the first device in the first range.

In this application, the first device performs data transmission by using the first frequency domain resource scheduled by the second device. The first frequency domain resource is less than or equal to the maximum aggregated spectrum supported by the first device in the first range. This avoids exceeding a processing capability of the first device, and improves the implementability of the solution.

Optionally, in a possible implementation, after the first device receives the first scheduling information, the first device determines the first frequency domain resource based on the first scheduling information. After determining the first frequency domain resource, the first device determines a spectrum processing resource of the first device based on the first frequency domain resource. The spectrum processing resource includes a processing resource used when the first device receives data carried on the first frequency domain resource, and/or a processing resource used when the first device sends the data carried on the first frequency domain resource.

In this application, the first device determines the spectrum processing resource of the first device based on the first frequency domain resource, to avoid an increase in power consumption caused by using excessive spectrum processing resources, and improve efficiency of the solution.

Optionally, in a possible implementation, after sending the capability information, the first device further sends fourth indication information to the second device. The fourth indication information indicates update of the capability information of the first device.

In this application, the first device sends a capability information update indication to the second device, thereby improving flexibility of the solution.

Optionally, in a possible implementation, the capability information includes a scaling factor. The scaling factor is used to determine the maximum aggregated spectrum.

In this application, the capability information may further include the scaling factor, and a specific value of the capability information, for example, a value of the maximum aggregated spectrum does not need to be sent, so that traffic is saved when the capability information is sent.

Optionally, in a possible implementation, a receive spectrum processing resource includes at least one of the following: a radio frequency processing resource, a front-end processing resource, a channel estimation processing resource, a demodulation processing resource, a decoding processing resource, a decryption processing resource, a measurement processing resource, and the like. The channel estimation processing resource may include at least one of the following: a channel estimation and demodulation resource of a physical downlink control channel (Physical Downlink Control Channel, PDCCH), a channel estimation resource of a physical downlink shared channel (Physical Downlink Shared Channel, PDSCH), a channel estimation and demodulation resource of a physical sidelink control channel (Physical Sidelink Control Channel, PSCCH), and a channel estimation resource of a physical sidelink data channel (Physical Sidelink Data Channel, PSDCH). The demodulation processing resource may include at least one of the following: a demodulation resource of a physical downlink control channel (Physical Downlink Control Channel, PDCCH), a demodulation resource of a physical downlink shared channel (Physical Downlink Shared Channel, PDSCH), a demodulation resource of a physical sidelink control channel (Physical Sidelink Control Channel, PSCCH), and a demodulation resource of a physical sidelink data channel (Physical Sidelink Data Channel, PSDCH). The decoding processing resource may include a polar code (Polar code) decoding unit and/or a low-density paritycheck code (Low Density Parity Check Code, LDPC) LDPC decoding unit. The first device may determine, based on at least one of factors such as an application scenario, a requirement, a function requirement, or costs, that the receive spectrum processing resource includes the one or more processing resources.

In this application, information that may be included in the receive processing resource is described. This improves the implementability of the solution. The first device may determine the processing resource included in the receive spectrum processing resource. This improves the flexibility of the solution.

Optionally, in a possible implementation, a transmit spectrum processing resource may include at least one of the following: a radio frequency processing resource, a power amplifier processing resource, a front-end processing resource, an encryption processing resource, a data packet processing resource, an encoding processing resource, a modulation processing resource, a transmit power control processing resource, and the like. It may be understood that another resource may be further included, for example, a resource required for processing each channel is further included, for example, a channel processing resource of a physical uplink shared channel (Physical Uplink Shared Channel, PUSCH), a channel processing resource of a physical uplink control channel (Physical Uplink Control Channel, PUCCH), a channel processing resource of a physical sidelink control channel (Physical Sidelink Control Channel, PSCCH), and a channel processing resource of a physical sidelink data channel (Physical Sidelink Data Channel, PSDCH). The first device may determine, based on at least one of factors such as an application scenario, a requirement, a function requirement, or costs, that the transmit spectrum processing resource includes the one or more processing resources.

In this application, information included in the transmit spectrum processing resource is described. This improves the implementability of the solution. The first device may determine the processing resource included in the transmit spectrum processing resource. This improves the flexibility of the solution.

Optionally, in a possible implementation, the first range indicated in the capability information may be specifically determined in at least one of the following manners: an air interface access protocol, a connection type, a link type, an application scenario, and the like.

In this application, the first device determines the first range in a plurality of manners, and the terminal device may determine the first range based on different application scenarios and/or costs and/or functions. This improves the flexibility and implementability of the solution.

Optionally, in a possible implementation, when the first device reports the capability information, the maximum aggregated spectrum that is supported by the first device in the first range and that is included in the capability information may be a maximum uplink aggregated spectrum, or a maximum downlink aggregated spectrum, or a maximum sidelink (sidelink, SL) aggregated spectrum, or a maximum sidelink receive aggregated spectrum, or a maximum sidelink transmit aggregated spectrum.

In this application, a plurality of possibilities of the maximum aggregated spectrum are described. This improves the flexibility of the solution.

Optionally, in a possible implementation, the receive processing resource of the first device may be shared by at least two carriers, and the at least two carriers are aggregated carriers that are supported by the first device and that are in a band or band combination in the first range.

In this application, the first device supports sharing of the processing resource by the at least two carriers in the band or band combination in the first range. This reduces the implementation complexity.

Optionally, in a possible implementation, when a primary carrier corresponding to the first device changes to a secondary carrier, the first device updates a minimum guaranteed bandwidth of the primary carrier.

In this application, when the carrier of the first device changes, the corresponding minimum guaranteed bandwidth is also updated. This improves the flexibility of the solution.

Optionally, in a possible implementation, the capability information further includes fifth indication information. The fifth indication information indicates a total quantity of multiple-input multiple-output MIMO layers supported by the first device in the first range.

In this application, when the capability information of the first device further indicates the total quantity of MIMO layers supported by the first device, the flexibility of the solution is improved.

Optionally, in a possible implementation, the first device sends the capability information to the second device in a capability information reporting manner.

In this application, the first device may send the capability information of the first device in the capability information reporting manner. This improves the implementability of the solution.

Optionally, in a possible implementation, the capability information includes a value of the maximum aggregated spectrum.

In this application, the capability information includes the value of the maximum aggregated spectrum. This improves the implementability of the solution.

Optionally, in a possible implementation, after receiving the first frequency domain resource, the first device determines whether the first frequency domain resource is less than the maximum aggregated spectrum supported by the first device in the first range. If the first frequency domain resource is greater than the maximum aggregated spectrum supported by the first device in the first range, the first device determines that a scheduling error occurs on the second device, and sends an error message to the second device.

In this application, when the first frequency domain resource is greater than the maximum aggregated spectrum supported by the first device, the first device sends the error message to the second device. This improves an error tolerance rate of the solution.

Optionally, in a possible implementation, the first device determines the first range based on a band range that can be supported by a component of the first device. The component of the first device may include any one of the following: an antenna, a radio frequency component, and a baseband processor.

In this application, the first device determines the first range based on the band range that can be supported by the component of the first device. This improves the implementability of the solution.

A second aspect of this application provides a capability information reporting method.

A second device receives capability information sent by a first device. The capability information of the first device indicates a maximum aggregated spectrum supported by the first device in a first range.

In this application, the second device receives the capability information sent by the first device, and the capability information indicates the maximum aggregated spectrum supported by the first device. In this way, the second device can determine, based on a capability of the first device, a resource to be scheduled to the first device, thereby avoiding a system error.

Optionally, in a possible implementation, the maximum aggregated spectrum is less than a first bandwidth. The first bandwidth indicates a sum of maximum bandwidths of all aggregated carriers supported by the first device in the first range.

In this application, the maximum aggregated spectrum supported by the first device is less than the sum of the maximum bandwidths of all the aggregated carriers in the first range, so that when the capability supported by the first device is designed, corresponding capabilities do not need to be designed based on the maximum bandwidths for all the aggregated carriers supported by the first device. However, a higher capability supported by the first device indicates higher corresponding costs. Therefore, reporting is performed by using the capability information reporting method provided in this embodiment of this application, so that design of excessive capabilities can be avoided in a design phase of the first device. This helps reduce costs of the first device.

Optionally, in a possible implementation, the capability information further includes first indication information. The first indication information indicates the first range supported by the first device.

In this application, when the capability information further includes the indication information indicating the first range supported by the first device, flexibility of this solution is improved.

Optionally, in a possible implementation, the capability information further includes second indication information. The second indication information indicates a minimum guaranteed bandwidth of a carrier supported by the first device in the first range.

In this application, when the capability information includes the minimum guaranteed bandwidth of the carrier supported by the first device in the first range, the second device may reserve the minimum guaranteed bandwidth for at least one carrier when scheduling a resource based on the capability information, so that a basic communication function of the at least one carrier is ensured.

Optionally, in a possible implementation, the capability information further includes third indication information. The third indication information indicates that the first device supports scheduling of a plurality of resource units in the first range. A sum of the plurality of resource units is less than or equal to the maximum aggregated spectrum.

In this application, when the capability information further includes the third indication information indicating that the first device supports scheduling of the plurality of resource units in the first range, implementability of the solution is improved.

Optionally, in a possible implementation, the third capability information further indicates that at least one of the aggregated carriers supported by the first device in the first range includes a plurality of non-contiguous resource units.

In this application, when the first device supports scheduling of the non-contiguous resource units, a frequency diversity gain may be fully used to improve spectrum resource utilization.

Optionally, in a possible implementation, after the second device receives the capability information, the second device determines a first frequency domain resource in the first range based on the capability information. The first frequency domain resource is used for data transmission between the first device and the second device. The first frequency domain resource is less than or equal to the maximum aggregated spectrum supported by the first device.

After the second device determines the first frequency domain resource that needs to be scheduled, the second device sends first scheduling information to the first device. The first scheduling information is used by the first device to determine the first frequency domain resource.

In this application, the second device sends the scheduled first frequency domain resource to the first device for data transmission. This improves the implementability of the solution.

Optionally, in a possible implementation, after receiving the capability information, the second device further receives fourth indication information sent by the first device. The fourth indication information indicates update of the capability information of the first device.

The second device determines a second frequency domain resource based on the fourth indication information. The second frequency domain resource is used for data transmission between the second device and the first device. The second device sends second scheduling information to the first device. The second scheduling information includes information about the second frequency domain resource.

In this application, the second device sends the updated second frequency domain resource to the first device by receiving a capability information update indication sent by the first device, thereby improving the flexibility of the solution.

Optionally, in a possible implementation, the capability information further includes a scaling factor. The scaling factor is used by the second device to determine the maximum aggregated spectrum.

In this application, the capability information may further include the scaling factor, and the second device may determine, based on the scaling factor, the maximum aggregated spectrum supported by the first device. This improves the implementability of the solution.

Optionally, in a possible implementation, the first range indicated in the capability information may be specifically determined in at least one of the following manners: an air interface access protocol, a connection type, a link type, an application scenario, and the like.

In this application, the first range may be determined in a plurality of manners, and a terminal device may determine the first range based on different application scenarios and/or costs and/or functions. This improves the flexibility of the solution.

Optionally, in a possible implementation, the maximum aggregated spectrum that is supported by the first device in the first range and that is included in the capability information may be a maximum uplink aggregated spectrum or a maximum downlink aggregated spectrum, or may be a maximum sidelink aggregated spectrum or a maximum sidelink receive aggregated spectrum or a maximum sidelink transmit aggregated spectrum.

In this application, a plurality of possibilities of the maximum aggregated spectrum are described. This improves the flexibility of the solution.

Optionally, in a possible implementation, the capability information further includes fifth indication information. The fifth indication information indicates a total quantity of multiple-input multiple-output MIMO layers supported by the first device in the first range.

In this application, when the capability information of the first device further indicates the total quantity of MIMO layers supported by the first device, the flexibility of the solution is improved.

Optionally, in a possible implementation, the second device receives the capability information sent by the first device in a capability information reporting manner.

In this application, the first device may send the capability information of the first device in the capability information reporting manner. This improves the implementability of the solution.

Optionally, in a possible implementation, the first range may be determined based on a band range that can be supported by a component of the first device. The component of the first device may include any one of the following: an antenna, a radio frequency component, and a baseband processor.

In this application, the first range may be determined based on the band range that can be supported by the component of the first device. This improves the implementability of the solution.

A third aspect of this application provides a communication apparatus, including:

a processing unit, configured to determine capability information of the communication apparatus, where the capability information indicates a capability of the communication apparatus for supporting a maximum aggregated spectrum in a first range; and
a sending unit, configured to send the capability information.

Optionally, in a possible implementation, the maximum aggregated spectrum is less than a first bandwidth. The first bandwidth is a sum of maximum bandwidths of all aggregated carriers supported by the communication apparatus in the first range.

Optionally, in a possible implementation, the capability information further includes first indication information. The first indication information indicates the first range of the communication apparatus.

Optionally, in a possible implementation, the capability information further includes second indication information. The second indication information indicates a minimum guaranteed bandwidth of a carrier of the communication apparatus in the first range.

Optionally, in a possible implementation, the capability information includes third indication information. The third indication information indicates that the communication apparatus supports scheduling of a plurality of resource units in the first range. A sum of the plurality of resource units is less than or equal to the maximum aggregated spectrum.

Optionally, in a possible implementation, at least one of all carriers supported by the communication apparatus in the first range includes non-contiguous resource units.

Optionally, in a possible implementation, the communication apparatus further includes:
a receiving unit, configured to receive first scheduling information. The first scheduling information determines a first frequency domain resource in the first range. The first frequency domain resource is used for data transmission of the communication apparatus. The first frequency domain resource is less than or equal to the maximum aggregated spectrum.

Optionally, in a possible implementation, the processing unit is further configured to determine the first frequency domain resource based on the first scheduling information; and
the processing unit is further configured to determine a spectrum processing resource of the communication apparatus based on the first frequency domain resource. The spectrum processing resource includes a processing resource used when the communication apparatus receives and/or sends data carried on the first frequency domain resource.

Optionally, in a possible implementation, the sending unit is further configured to send fourth indication information. The fourth indication information indicates update of the capability information of the communication apparatus.

Optionally, in a possible implementation, the capability information includes a scaling factor. The scaling factor is used to determine the maximum aggregated spectrum.

A fourth aspect of this application provides a communication apparatus.

The communication apparatus includes:
a receiving unit, configured to receive capability information of the communication apparatus. The capability information indicates a maximum aggregated spectrum supported by the communication apparatus in a first range.

Optionally, in a possible implementation, the maximum aggregated spectrum is less than a first bandwidth. The first bandwidth is a sum of maximum bandwidths corresponding to all carriers supported by the communication apparatus in the first range.

Optionally, in a possible implementation, the capability information includes first indication information. The first indication information indicates the first range of the communication apparatus.

Optionally, in a possible implementation, the capability information further includes second indication information. The second indication information indicates a minimum guaranteed bandwidth of a carrier in the first range.

Optionally, in a possible implementation, the capability information includes third indication information. The third indication information indicates that the communication apparatus supports scheduling of a plurality of resource units in the first range. A sum of the plurality of resource units is less than or equal to the maximum aggregated spectrum.

Optionally, in a possible implementation, at least one of all carriers supported by the communication apparatus in the first range includes non-contiguous resource units.

Optionally, in a possible implementation, the communication apparatus further includes:
a processing unit, configured to determine a first frequency domain resource in the first range based on the capability information. The first frequency domain resource is used for data transmission of the communication apparatus. The first frequency domain resource is less than or equal to the maximum aggregated spectrum.

The communication apparatus further includes:
a sending unit, configured to send first scheduling information. The first scheduling information determines the first frequency domain resource.

Optionally, in a possible implementation, the receiving unit is further configured to receive fourth indication information, where the fourth indication information indicates update of the capability information;

the processing unit is further configured to determine a second frequency domain resource based on the fourth indication information, where the second frequency domain resource is used for data transmission; and

the sending unit is further configured to send second scheduling information. The second scheduling information includes information about the second frequency domain resource.

Optionally, in a possible implementation, the capability information includes a scaling factor. The scaling factor is used to determine the maximum aggregated spectrum.

A fifth aspect of this application provides a communication apparatus, including a processor and a memory. The processor stores program code, and the processor executes the program code to implement the method in the first aspect of this application and the implementations of the first aspect.

A sixth aspect of this application provides a communication apparatus, including a processor and a memory. The processor stores program code, and the processor executes the program code to implement the method in the second aspect of this application and the implementations of the second aspect.

A seventh aspect of this application provides a communication system, including a terminal device and a network device, where

the terminal device is configured to perform the method in the implementations of the first aspect of this application; and

the network device is configured to perform the method in the implementations of the second aspect of this application.

An eighth aspect of this application provides a computer storage medium. The computer storage medium stores instructions, and when the instructions are executed on a computer, the computer is enabled to perform the method in the implementations of the first aspect and/or the second aspect of this application.

A ninth aspect of this application provides a computer program product. When the computer program product is executed on a computer, the computer is enabled to perform the method in the implementations of the first aspect and/or the second aspect of this application.

A tenth aspect of this application provides a communication apparatus. The communication apparatus includes a processor and a memory. The memory stores a computer program, and the processor executes the computer program stored in the memory, to enable the communication apparatus to perform the method in the implementations of the first aspect and/or the second aspect of this application.

An eleventh aspect of this application provides a communication apparatus. The communication apparatus includes a processor and an interface circuit, where

the interface circuit is configured to receive code instructions and transmit the code instructions to the processor; and

the processor is configured to run the code instructions to perform the method in the implementations of the first aspect and/or the second aspect of this application.

A twelfth aspect of this application provides a readable storage medium, configured to store instructions. When the instructions are executed, the implementation method in the first aspect and/or the second aspect of this application is implemented.

According to the capability information reporting method and apparatus provided in embodiments of this application, when a first device reports capability information to a second device, the capability information of the first device for supporting a maximum aggregated spectrum in a first range is carried in the capability information, so that a new capability information reporting manner is provided. In this new capability information reporting manner, the first device does not need to perform reporting in a reporting manner of a maximum bandwidth corresponding to each component carrier supported by the first device. Therefore, when a capability supported by the first device is designed, design may not need to be performed in the manner in which each component carrier corresponds to the maximum bandwidth. This reduces corresponding design costs of the first device, reduces a waste of a capability of a terminal device, and makes resource scheduling more appropriate.

**BRIEF DESCRIPTION OF DRAWINGS**

FIG. 1 is a schematic diagram of an architecture of a communication system according to an embodiment of this application;

FIG. 2 is a schematic flowchart of a capability information reporting method according to an embodiment of this application;

FIG. 3 is a schematic flowchart of another capability information reporting method according to an embodiment of this application;

FIG. 4 is a schematic flowchart of another capability information reporting method according to an embodiment of this application;

FIG. 5 is a schematic diagram of a maximum aggregated spectrum supported by a terminal device according to an embodiment of this application;

FIG. 6 is a schematic diagram of a maximum aggregated spectrum supported by a terminal device according to an embodiment of this application;

FIG. 7 is a schematic diagram of another maximum aggregated spectrum supported by a terminal device according to an embodiment of this application;

FIG. 8 is a schematic diagram of another maximum aggregated spectrum supported by a terminal device according to an embodiment of this application;

FIG. 9 is a schematic diagram of another maximum aggregated spectrum supported by a terminal device according to an embodiment of this application;

FIG. 10 is a schematic diagram of a structure of a communication apparatus according to an embodiment of this application;

FIG. 11 is a schematic diagram of a structure of another communication apparatus according to an embodiment of this application;

FIG. 12 is a schematic diagram of a structure of another communication apparatus according to an embodiment of this application;

FIG. 13 is a schematic diagram of a structure of another communication apparatus according to an embodiment of this application;

FIG. 14 is a schematic diagram of a structure of a terminal device according to an embodiment of this application; and

FIG. 15 is a schematic diagram of a structure of another communication apparatus according to an embodiment of this application.

## DESCRIPTION OF EMBODIMENTS

To facilitate understanding of embodiments of this application, the following describes terms related to this application.

Carrier: Unless otherwise specified, the carrier in embodiments of this application is a segment of contiguous spectrum in frequency domain. For example, under the 3GPP NR protocol, the carrier is equivalent to a carrier (carrier) or a component carrier (component carrier, CC) defined in the 3GPP NR. The carrier may further refer to a bandwidth part (band width part, BWP). The carrier may further correspond to one cell cell, one channel channel, one sub-channel sub-channel, one or more resource blocks (resource blocks, RBs), or a resource block group (resource block group, RBG). The resource block group may be physically contiguous, for example, a physical resource block (physical resource lock, PRB), or may be physically non-contiguous, but mapped to virtual contiguous resources, for example, a virtual resource block (virtual resource block, VRB), according to a specific mapping rule. In embodiments provided in this application, implementation effects are the same for different names of a segment of contiguous spectrum in frequency domain, such as the component carrier, the BWP, the resource block, the resource block group, the channel, or the sub-channel. For ease of description, details are not described again.

Data transmission: Data transmission includes sending data and/or receiving data.

Carrier taking effect: Unless otherwise specified, carrier taking effect in embodiments of this application means that a carrier (which means different names of a segment of contiguous spectrum in frequency domain, such as a carrier, a component carrier, a BWP, a resource block, a resource block group, a channel, and a sub-channel) is determined to be in a working state by both a first device and a second device. The working state may be one or more of a configured state, an activated state, and an enabled state. Specifically, carrier taking effect includes:

Carrier being configured: A second device notifies a first device of configuration information (including information such as a bandwidth and a center frequency) of the carrier by using higher layer signaling (for example, a radio resource control message).

Carrier being activated: A second device notifies, by using one of higher layer signaling, media access control (media access control, MAC) signaling, or physical layer signaling, a terminal device to activate the carrier. Being activated may also be referred to as being enabled.

Unless otherwise specified, for ease of description, carrier taking effect and carrier being configured are used as an example for description in the embodiments of this application.

Spectrum processing resource: The spectrum processing resource in embodiments of this application is a processing resource of a terminal device that needs to be used by the terminal device to process a spectrum, for example, a processing resource in a central processing unit of the terminal device. It may be understood that the spectrum processing resource may further include another processing resource, for example, a memory resource, in the terminal device. This is not specifically limited herein.

Carrier aggregation: The carrier aggregation described in embodiments of this application means that a terminal device supports simultaneous scheduling or processing of more than one carrier, and is not limited to a radio access technology. The carrier herein is also referred to as a component carrier (component carrier, CC). For example, these carriers may support a same radio access technology (radio access technology, RAT), for example, all carriers support an NR radio access technology. Alternatively, these carriers may support different RATs, for example, one carrier is an LTE carrier and one carrier is an NR carrier. A plurality of carriers may belong to a same cell group (cell group, CG), or may belong to different CGs, for example, one carrier is in a primary CG, and one carrier is in a secondary CG. The plurality of carriers may belong to a same band, or may belong to different bands. The plurality of carriers may be used for communication of one connection, or may be used for communication of different connections, for example, multi-radio dual connectivity (multi-radio dual connectivity, MR-DC), one carrier is used for communication of an LTE connection, and another carrier is used for communication of an NR connection. The plurality of carriers may be used for communication on a same link, or may be used for communication on different links, for example, one carrier is used for a cellular link Uu link, and one carrier is used for a sidelink sidelink. The plurality of carriers may be used for communication of a same type of service, or may be used for communication of different services. For example, one carrier is used for an enhanced mobile broadband (enhanced mobile broadband, eMBB) service, one carrier is used for an Internet of Vehicles service, one carrier is used for an ultra-reliable low-latency communication service, and one carrier is used for a massive Internet of Things (massive Internet of Things, mIoT) service. Alternatively, one carrier is used for an eMBB service and a URLLC service, and one carrier is used for a V2X service.

To better understand a capability information reporting method disclosed in embodiments of this application, the following first describes a communication system to which the embodiments of this application is applicable.

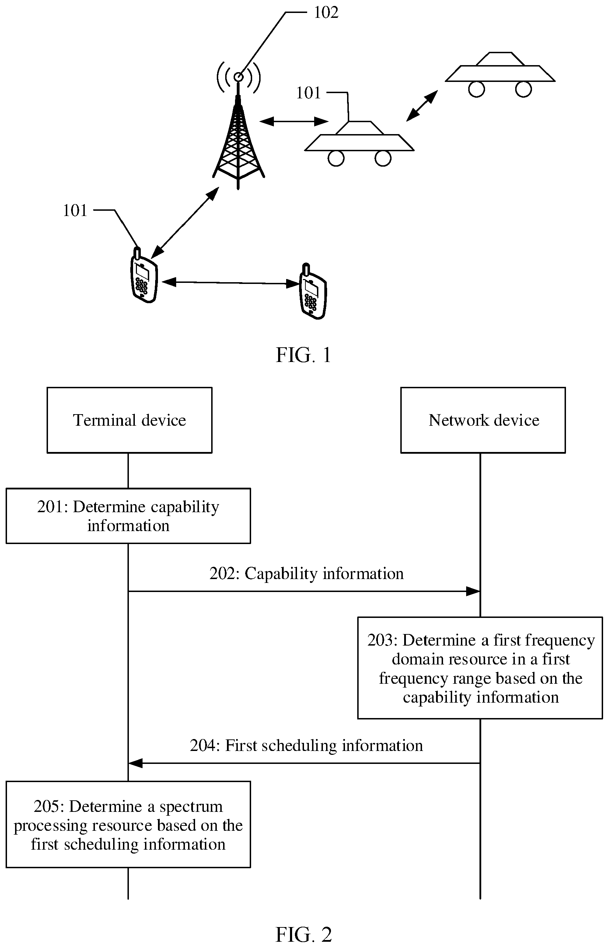

FIG. 1 is a schematic diagram of an architecture of a communication system according to an embodiment of this application. The communication system may include but is not limited to one network device and one terminal device. A quantity of devices and forms of the devices shown in FIG. 1 are merely used as examples, but do not constitute a limitation on this embodiment of this application. During actual application, the communication system may include two or more network devices and two or more terminal devices. An example in which the communication system shown in FIG. 1 includes one network device 102 and a plurality of terminal devices 101 is used for description.

It should be noted that the technical solutions in embodiments of this application invention may be applied to various communication systems, for example, an LTE system, a 5th generation (5th generation, 5G) mobile communication system, a 5G NR system, or another future new mobile communication system. The communication system may alternatively be a communication system that supports a plurality of wireless technologies, for example, a communication system that supports LTE and NR. The communication system may alternatively be a communication system that supports near field communication, for example, a communication system that supports a sidelink (sidelink, SL) technology, and a communication system that supports a wireless fidelity (wireless fidelity, WiFi) technology. It should be further noted that the sidelink in embodiments of this application may also be referred to as a sidelink or a direct link.

The network device 102 in embodiments of this application is an entity that is configured to transmit or receive a signal and that is on a network side. For example, the network device 102 may be an evolved NodeB (evolved NodeB, eNB), a transmission point (transmission reception point, TRP), a next generation NodeB (next generation NodeB, gNB) in an NR system, a transmission reception point (transmission reception point, TRP), a relay node (relay node, RN), an access point (access point, AP), a base station in another future mobile communication system, an access node in a WiFi system, or the like. A specific technology and a specific device form that are used by the network device are not limited in embodiments of this application.

The terminal device 101 in embodiments of this application is an entity, for example, a mobile phone, that is configured to receive or transmit a signal and that is on a user side. The terminal device may also be referred to as a terminal (terminal), user equipment (user equipment, UE), a mobile station (mobile station, MS), a mobile terminal (mobile terminal, MT), or the like. The terminal device may be a vehicle, an intelligent vehicle, a mobile phone (mobile phone), a wearable device, a tablet computer (Pad), a computer having a wireless transceiver function, a virtual reality (virtual reality, VR) terminal device, or an augmented reality (augmented reality, AR) terminal device that has a communication function, a wireless terminal in industrial control (industrial control), a wireless terminal in self-driving (self-driving), a wireless terminal in remote medical surgery (remote medical surgery), a wireless terminal in a smart grid (smart grid), and a wireless terminal in transportation safety (transportation safety); a wireless terminal in a smart city (smart city), a wireless terminal in a smart home (smart home), and the like. A specific technology and a specific device form that are used by the terminal device are not limited in embodiments of this application.

In the communication system in FIG. 1, in an optional implementation, the terminal device 101 reports capability information of the terminal device 101 to the network device 102, and the network device 102 performs resource scheduling based on the capability information reported by the terminal device 101, to communicate with the terminal device 101.

In another optional implementation, the terminal device 101 has a scheduling function. In a process in which the terminal device 101 directly communicates with another terminal device, the terminal device 101 receives capability information sent by the another terminal device, and the terminal device 101 determines, based on the capability information sent by the another terminal device, a resource that needs to be scheduled, and communicates with the another terminal device based on the determined resource that needs to be scheduled. The terminal device 101 directly communicating with the another terminal device indicates that when information is transmitted between the terminal device 101 and the another terminal device, the terminal device 101 directly exchanges the information without forwarding the information by using the network device 102 in a scenario, for example, a vehicle-to-anything V2X communication system scenario or a machine-to-machine M2M scenario.

The following describes in detail a capability information reporting method and apparatus provided in embodiments of this application with reference to the accompanying drawings.

In this embodiment of this application, after a first device reports capability information, corresponding capability information may change, and new capability information needs to be reported to a second device again. Therefore, corresponding methods are also different. Several different cases are separately described in this embodiment of this application.

1. The first device reports the capability information.

This embodiment describes an example in which the first device is a terminal device and the second device is a network device. FIG. 2 is a schematic flowchart of a capability information reporting method according to an embodiment of this application.

Step 201: The terminal device determines capability information.

The terminal device determines the capability information of the terminal device. The capability information specifically includes a capability of the terminal device for supporting a maximum aggregated spectrum in at least one first range, to be specific, the maximum aggregated spectrum indicates a total spectrum that can be supported by the terminal device in the first range. The total spectrum is less than a first bandwidth. The first bandwidth indicates a sum of maximum bandwidths of all aggregated carriers that are supported by the terminal device in the first range and that are in a band or band combination.

It should be noted that in all the embodiments of this application, a concept of a carrier may be equivalent to a component carrier. The following uses the carrier for description. This application is not limited thereto, and details are not described herein again.

The terminal device may calculate the maximum aggregated spectrum according to the following formula:

$$\text{Maximum aggregated spectrum} < max(\sum\nolimits_{j-1}^{J} BW^{(j)}, \text{for all supported bands or band combinations})$$

J is a total quantity of the aggregated carriers that are in the band or band combination in the first range and that are supported by the terminal device. $BW^{(j)}$ is a maximum bandwidth of a carrier j of the terminal device. The carrier j is a carrier that is in the band or band combination in the first range and that is supported by the terminal device. $\sum\nolimits_{j=1}^{J} BW^{(j)}$ is a sum of maximum bandwidths of all component carriers, that undergo carrier aggregation, that are in the band or band combination in the first range, and that are supported by the terminal device. $max(\sum\nolimits_{j-1}^{J} BW^{(j)},$ for all supported bands or band combinations) indicates a sum of maximum bandwidths of all component carriers, that undergo carrier aggregation, that are in all bands or band combinations in the first range, and that are supported by the terminal device.

For example, as shown in Table 1, the terminal device supports carrier aggregation in a band A, a band B, a band C, a band combination {band A + band B}, and a band combination {band A + band B + band C}. J indicates a quantity of component carriers supported by the terminal device in a corresponding band. One carrier is supported in the band A, two carriers are supported in the band B, and one carrier is supported in the band C. If a maximum bandwidth of each component carrier is 100 MHz, a sum of maximum bandwidths of all component carriers that undergo carrier aggregation and that are supported by the terminal device in the band combination {band A + band B + band C} is 400 MHz. It can be learned that a value is 400 MHz by aggregating all carriers that are in the band and band combination and that are supported by the terminal device. In this embodiment of the present invention, it is determined that the maximum aggregated spectrum is less than 400 MHz.

**Table 1 Corresponding schematic table of maximum bandwidths of bands and band combinations supported by a terminal device**

| | Quantity J of aggregated carriers in a corresponding band or band combination | Sum $\sum_{j=1}^{J} BW^{(j)}$ of maximum bandwidths of aggregated carriers in the corresponding band or band combination |
|---|---|---|
| Band A | 1 | 100 M |
| Band B | 2 | 200 M |
| Band C | 1 | 100 M |
| Band combination {band A + band B} | 1 + 2 = 3 | 300 M |
| Band combination {band A + band B + band C} | 1 + 2 + 1 = 4 | 400 M |

In this embodiment of this application, the maximum aggregated spectrum may alternatively be represented by using a size of a PRB. For example, the maximum aggregated spectrum is calculated according to the following formula:

$$\text{Maximum aggregated spectrum} \leq max(\sum_{j-1}^{J} N_{PRB}^{BW(j),\mu}, \text{for all supported bands or band combinations})$$

J is a total quantity of carriers, that undergo carrier aggregation, that are in all band or band combinations in the first range, and that are supported by the terminal device. |1 indicates a subcarrier spacing. $N_{PRB}^{BW(j),\mu}$ indicates, for a parameter |1, a maximum quantity of RBs corresponding to a channel bandwidth $BW$ of the carrier j. In a possible implementation, $N_{PRB}^{BW(j),\mu} = N_{RB}$ , and values of $N_{RB}$ are shown in Table 2a and Table 2b. |1 indicates different subcarrier spacings SCSs.

**Table 2a Table of maximum quantities of resource blocks corresponding to different subcarrier spacings**

| SCS (kHz) | 5 MHz | 10 MHz | 15 MHz | 20 MHz | 25 MHz | 30 MHz | 40 MHz | 50 MHz | 60 MHz | 80 MHz | 90 MHz | 100 MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

Table 2b Table of maximum quantities of resource blocks corresponding to different subcarrier spacings

| SCS (kHz) | 50 MHz | 100 MHz | 200 MHz | 400 MHz |
|---|---|---|---|---|
| | NRB | NRB | NRB | NRB |
| 60 | 66 | 132 | 264 | N.A |
| 120 | 32 | 66 | 132 | 264 |

In a possible implementation, the capability information of the terminal device further includes information about a spectrum processing resource of the terminal device. The spectrum processing resource indicates a local resource that is of the terminal device and that is used when the terminal device receives and/or sends data. The local resource may include, for example, a processor resource and/or a memory resource. This is not specifically limited herein. The spectrum processing resource may specifically include at least one of a processing resource (referred to as a downlink spectrum processing resource or a receive spectrum processing resource of a device) used to receive a signal carried on a carrier, or a processing resource (referred to as an uplink spectrum processing resource or a transmit spectrum processing resource of the device) used to send a signal carried on a carrier. In device-to-device communication (for example, in a D2D scenario or a V2V scenario), the spectrum processing resource may also be referred to as a sidelink processing resource.

The receive spectrum processing resource of the device includes at least one of a receive storage resource or a receive processing resource, and the receive storage resource may include at least one of the following: a storage resource of data obtained by baseband sampling, a soft bit storage resource of demodulated data, a decoded transport block storage resource, and the like. It may be understood that the receive storage resource may further include more resources, for example, a storage resource of a higher layer data packet. This is not specifically limited herein.

The receive processing resource may include at least one of the following: a radio frequency processing resource, a front-end processing resource, a channel estimation processing resource, a demodulation processing resource, a decoding processing resource, a decryption processing resource, a measurement processing resource, and the like. The channel estimation processing resource may include at least one of the following: a channel estimation resource of a PDCCH, a channel estimation resource of a PDSCH, a channel estimation resource of a PSCCH, and a channel estimation resource of a PSDCH. The demodulation processing resource may include at least one of the following: a demodulation resource of the PDCCH, a demodulation resource of the PDSCH, a demodulation resource of the PSCCH, and a demodulation resource of the PSDCH. The decoding processing resource may include a polar code decoding unit and/or an LDPC decoding unit. It may be understood that the receive processing resource may further include more resources, for example, a channel state calculation processing resource and a protocol stack processing resource. This is not specifically limited herein.

The transmit spectrum processing resource of the device includes a transmit storage resource and/or a processing resource. The transmit storage resource may include at least one of the following: a storage resource of a higher layer data packet, a storage resource of a MAC layer data packet, and a storage resource of a transport block. It may be understood that the transmit storage resource may further include more resources, for example, an encoded data storage resource, a modulated data storage resource, and a mapped data storage resource. This is not specifically limited herein.

The transmit spectrum processing resource of the device may include at least one of the following: a radio frequency processing resource, a power amplification processing resource, a front-end processing resource, an encryption processing resource, a data packet processing resource, an encoding processing resource, a modulation processing resource, a transmit power control processing resource, and the like. It may be understood that the transmit spectrum processing resource of the device may further include another resource, for example, include a resource, such as a PUSCH channel processing resource, a PUCCH channel processing resource, a PSCCH processing resource, or a PSDCH processing resource, that needs to be used to process each channel. In an actual application process, the transmit spectrum processing resource of the device may further include more processing resources. This is not specifically limited herein.

In a possible implementation, the capability information of the terminal device further includes first indication information. The first indication information indicates the first range of the terminal device. The terminal device may support at least one first range. The first range is a frequency range that may be supported by the terminal device and that is determined based on one or more bands. For example, if a working range supported by a radio frequency component of the terminal device is the band A, the first range is the band A. It may be understood that the first range may be further determined based on a band that can be supported by another component of the terminal device, for example, an antenna and/or a baseband processor of the terminal device. This is not specifically limited herein.

Optionally, division of the first range may be the same as that of a frequency range (frequency range, FR) in an existing protocol, for example, consistent with division of FR1 and FR2 in the 3GPP NR protocol. As shown in Table 3, in this case, the first range is a frequency range represented by FR1. Alternatively, the first range is a frequency range represented by FR2, or a total frequency range of a combination of the frequency ranges represented by FR1 and FR2.

Table 3 Frequency ranges corresponding to FR1 and FR2 defined in a 3GPP NR protocol

|  | Corresponding frequency range |
| --- | --- |
| FR1 | 410 MHz -7125 MHz |
| FR2 | 24250 MHz - 52600 MHz |

The terminal device may support at least one first range. Specifically, in a possible implementation, as shown in Table 4, the terminal device supports FR1, or the terminal device supports FR2, or the terminal device supports FR1 and FR2. The terminal device has a capability for supporting the maximum aggregated spectrum in the first range, for example, a maximum aggregated spectrum supported by the terminal device in FR1, a maximum aggregated spectrum supported by the terminal device in FR2, or a maximum aggregated spectrum supported by the terminal device in a range determined by both FR1 and FR2, that is, all band ranges.

**Table 4 Schematic table of a correspondence between a first range and a maximum aggregated spectrum**

| First range | Maximum aggregated spectrum | Description |
|---|---|---|
| FR1 | 100 MHz | Indicates that a total spectrum that can be processed by carriers in all bands or band combinations supported by a terminal in FR1 is 100 MHz. A 100 MHz capability may be shared between all carriers in the bands or band combinations supported in FR1. |
| FR2 | 400 MHz | Indicates that a total spectrum that can be processed by carriers in all bands or band combinations supported by the terminal in FR2 is 400 MHz. A 400 MHz capability may be shared between all carriers in the bands or band combinations supported in FR1. |
| FR1 + FR2 | 400 MHz | Indicates that a total spectrum that can be processed by carriers in all bands or band combinations supported by the terminal in FR1 + FR2 is 400 MHz. A 400 MHz capability may be shared between all carriers in the bands or band combinations supported in FR1 and FR2. |

Optionally, in a possible implementation, the first range may further include a set of one or more bands. For example, a first range 1 is a set A, a first range 2 is a set B, the set A = {n34, n36, n40, n41}, and the set B = {n77, n78, n79}, where n34, n36, n40, n41, n77, n78, and n79 respectively indicate different bands. It should be noted that bands in sets included in a plurality of first ranges may overlap. For example, the set A = {n34, n36, n40, n41}, and the set B = {n41, n77, n78, n79}, that is, a band n41 is in both the first range 1 and the first range 2. n34, n36, n41, n77, n78, and n79 are band numbers defined in 3GPP NR 38.101. For details, see TS 38.101-1.

In a possible implementation, the first range may alternatively be defined based on an air interface access protocol, for example, a radio access technology (radio access technology, RAT), supported by the terminal device. For example, for a terminal device that supports LTE-NR dual connectivity, if the terminal device supports sharing of the spectrum processing resource of the terminal device between all bands and/or band combinations in LTE and some bands and/or band combinations in NR, these bands and/or band combinations in LTE and some bands and/or band combinations in NR that may share the spectrum processing resource are defined as the first range. It may be understood that, alternatively, some bands and/or band combinations in LTE and all bands and/or band combinations in NR may be defined as the first range, provided that the device spectrum processing resource of the terminal device may be shared between all air interface access protocol-defined bands and/or band combinations. This is not specifically limited herein. For the terminal device that supports LTE-NR dual connectivity, the device spectrum processing resource may alternatively be shared between carriers in all bands or band combinations in LTE, and a processing capability is shared between carriers in all bands or band combinations in NR, but the processing capability cannot be shared between carriers in LTE and NR. Several examples of defining the first range based on the air interface protocol supported by the terminal device are shown in Table 5.

**Table 5 Schematic table of a correspondence between a first range and a maximum aggregated spectrum**

| First range | Maximum aggregated spectrum | Description |
|---|---|---|
| LTE | 100 MHz | Indicates that a total spectrum that can be processed by carriers in all bands or band combinations supported by a terminal in LTE is 100 MHz. A 100 MHz capability may be shared between all carriers in the band or band combination supported in LTE. |
| NR | 100 MHz | Indicates that a total spectrum that can be processed by carriers in all bands or band combinations supported by the terminal in LTE is 100 MHz. A 100 MHz capability may be shared between all carriers in the band or band combination supported in |

(continued)

| First range | Maximum aggregated spectrum | Description |
|---|---|---|
| | | LTE. |
| LTE + NR | 120 MHz | Indicates that a total spectrum that can be processed by carriers in all bands or band combinations supported by the terminal in LTE and NR is 120 MHz. A 120 MHz capability may be shared between all carriers in the bands or band combinations supported in LTE and NR. |
| All bands supported in LTE and NR in FR1 | 120 MHz | Indicates that a total spectrum that can be processed by carriers in all bands or band combinations supported by the terminal in LTE and NR in a range of FR1 is 120 MHz. A 120 MHz capability may be shared between all carriers in the bands or band combinations supported in LTE and NR in the range of FR1. |

In a possible implementation, the first range may alternatively be defined based on a connection (connection) supported by the terminal device. For example, a terminal device that supports MR-DC supports two NR connections. If in the two NR connections, bands and/or band combinations supported by the terminal device may share the spectrum processing resource, a band and/or band combination between the two NR connections of the terminal device that supports MR-DC is defined as the first range. It may be understood that if bands and band combinations between a plurality of connections of the terminal device may share the spectrum processing resource, these connections that can share the spectrum processing resource are defined as a first frequency resource. Certainly, if the processing resource cannot be shared between the two NR connections, but the spectrum processing resource can be shared in the connection, a band and/or band combination supported in the connection that can share the processing resource are/is defined as one first range.

In a possible implementation, the first range may alternatively be defined based on a link type supported by the terminal device. For example, the spectrum processing resource may be shared between a Uu link band and/or band combination and/or a sidelink band and/or band combination of a terminal device that supports a cellular air interface link Uu link and a sidelink sidelink. In this case, the Uu link and the sidelink are defined as the first range, alternatively, the Uu link band and/or band combination and the sidelink band and/or band combination that can share the spectrum processing resource are defined as the first range. The spectrum processing resource may be shared between carriers in supported Uu link band and/or band combination and sidelink band and/or band combination. Table 6 shows an example.

**Table 6 Schematic table of a correspondence between a first range and a maximum aggregated spectrum**

| First range | Maximum aggregation capability | Description |
|---|---|---|
| Uu Link | 100 MHz | Indicates that a total spectrum that can be processed by carriers in all Uu link bands or band combinations supported by a terminal is 100 MHz. A 100 MHz capability may be shared between all carriers that are in supported bands or band combinations and that are used for the Uu link. |
| Sidelink | 40 MHz | Indicates that a total spectrum that can be processed by carriers in all sidelink bands or band combinations supported by the terminal is 40 MHz. A 40 MHz capability may be shared between all carriers that are in the supported bands or band combinations and that are used for the sidelink. |
| Uu link and sidelink | 120 MHz | Indicates that a total spectrum that can be processed by carriers in all Uu link bands or band combinations and all sidelink bands or band combinations that are supported by the terminal is 120 MHz. A 120 MHz capability may be shared between all carriers that are in the supported bands or band combinations and that are used for the Uu link and the sidelink. |

In a possible implementation, the first range may alternatively be defined based on a service type supported by the terminal device, or a supported application scenario, or a supported feature. For example, for a terminal device that supports an eMBB service and a V2X feature, some or all of the bands and/or band combinations supported by the terminal device in the eMBB scenario and the bands and/or band combinations supported by the terminal device in the V2X scenario may share the spectrum processing resource. In this case, these bands and/or band combinations that may share the spectrum processing resource are defined as the first range.

In a possible implementation, a plurality of frequency ranges may be defined by using the following Table 7. For example, frequency range division herein is based on whether most terminal devices in the industry can share a radio frequency component. For example, a same receive radio frequency channel may be shared for receiving a radio signal whose spectrum is less than 1 GHz. In this case, an infinite signal less than 1 GHz is divided into a frequency range, and so on.

**Table 7 Schematic table of a correspondence between a frequency range and a corresponding spectrum range**

| Frequency range | Spectrum range |
| --- | --- |
| Frequency range Frequency Range 1 | < 1GHz |
| Frequency range Frequency Range 2 | 1 GHz - 3 GHz |
| Frequency range Frequency Range 3 | 3 GHz - 5 GHz |
| Frequency range Frequency Range 4 | 5 GHz - 8 GHz |
| Frequency range Frequency Range 5 | 10 GHz - 30 GHz |
| Frequency range Frequency Range 6 | 30 GHz - 45 GHz |
| Frequency range Frequency Range 7 | 45 GHz - 75 GHz |
| Frequency range Frequency Range 8 | 70 GHz - 80 GHz |

The first range may be defined as one or more frequency ranges, and the spectrum processing resource may be shared between carriers in the first range. For example, when the first range includes FR1, FR2, FR3, and FR4 indicated in Table 7, the terminal device shares the spectrum processing resource between carriers supported in FR1, FR2, FR3, and FR4. The spectrum ranges indicated by FR1, FR2, FR3, and FR4 are less than 8 GHz. When the first range is defined as FR1, FR2, FR3, and FR4, it indicates that the spectrum processing resource is shared between aggregated carriers less than 8 GHz.

It may be understood that the first range is determined based on a working mode of at least two carriers that may share the spectrum processing resource. The working mode is determined based on at least one of a band or band combination in which a carrier is located, a supported air interface protocol, a supported connection type, a supported link type, or a supported service type. For example, the first range is defined based on both an air interface protocol supported by the terminal device and a service type supported by the terminal device, or is defined based on a link type supported by the terminal device and different connections supported by the terminal device, or is defined based on a band range supported by an operator. This is not specifically limited herein.

It should be noted that the spectrum processing resource that can be shared between the at least two carriers in the first range refers to: when the terminal device uses the at least two carriers in the first range to transmit data, and the terminal device may invoke all carriers less than the at least two carriers to respectively transmit data, a sum of maximum spectrum processing resources required by the terminal device.

In a possible implementation, the capability information of the terminal device further includes second indication information. The second indication information indicates a minimum guaranteed bandwidth of at least one carrier in the first range. The minimum guaranteed bandwidth indicates a processing capability reserved by the terminal device for the carrier.

The spectrum processing resource that may be shared by the terminal device in the first range is less than or equal to a total aggregated spectrum minus a sum of the minimum guaranteed bandwidth of the at least one carrier, for example, may be represented according to the following formula:

$$\sum_{k=1}^{K} \text{Channel BW}^{(k)} \leq \text{Maximum aggregated spectrum} - \sum_{l=1}^{L} \text{Minimum guaranteed BW}^{(l)}$$

K is a quantity of effective carriers in the first range. Channel BW$^{(k)}$ is a spectrum allocated to an effective carrier k in the first range. L is a quantity of carriers of which the minimum guaranteed bandwidths are defined in the first range. Minimum guaranteed BW$^{(l)}$ is a minimum guaranteed bandwidth of a carrier 1 in the first range.

$$\sum_{l=1}^{L} \text{Minimum guaranteed BW}^{(l)}$$

indicates a sum of minimum guaranteed bandwidths of all carriers that have the minimum guaranteed bandwidths in the first range. $\sum_{k=1}^{K} \text{Channel BW}^{(k)}$ indicates a sum of schedulable spectrums of all effective carriers in the first range. The effective carrier herein is a carrier that can be used for data transmission.

The minimum guaranteed bandwidth may be determined according to a predefined rule based on a channel that the terminal device needs to listen on and/or communication that the terminal device needs to maintain and/or an implementation architecture of the terminal device, or may be independently determined by the terminal device. For example, a minimum guaranteed bandwidth corresponding to one carrier may be defined as a minimum bandwidth used by the terminal device to maintain one or more communication functions of the carrier. The communication function may include at least one of the following: initial access, system message receiving, paging message receiving, random access, uplink signaling feedback, small packet receiving or transmitting, wake-up signal receiving or transmitting, downlink control channel listening, measurement, mobility, channel quality detection, timing synchronization, frequency tracking, phase tracking, beam tracking and selection, and the like. It may be understood that another communication function, for example, cell selection and reselection, may be further included. This is not specifically limited herein.

In a possible implementation, in a 3GPP NR system, the minimum guaranteed bandwidth may be a bandwidth that needs to be supported by the terminal to ensure successful initial access, for example, a bandwidth defined by a control resource set (control resource set, CORESET) whose number is 0. In FR1 defined by NR, a value of the minimum guaranteed bandwidth may include any one of the following: 5 MHz, 10 MHz, 20 MHz, and 40 MHz. Alternatively, at least one of bandwidths that are of an initial BWP, that need to be supported, and that are specified in the NR system is defined as the minimum guaranteed bandwidth.

In a 3GPP LTE system, the minimum guaranteed bandwidth may be a bandwidth of a synchronization channel, which is 1.4 MHz. The control resource set is a size of a frequency domain resource of a downlink control channel PDCCH. The minimum guaranteed bandwidth may also be defined in a unit of a resource block that is actually used to transmit data. For example, in the 3GPP NR system, when the subcarrier spacing is 30 kHz, the value of the minimum guaranteed bandwidth is 48 resource blocks RBs. In the 3GPP LTE system, when the subcarrier spacing is 15 kHz, the minimum guaranteed bandwidth is 6 RBs. The minimum guaranteed bandwidth of the carrier supported by the terminal device may have different values based on a band on which the carrier supported by the terminal device is located, a used air interface protocol, a connection (Connection) attribute, a link (link) attribute, a supported service type, and the like. For example, a minimum guaranteed bandwidth of a carrier in the band A is 20 MHz, and a minimum guaranteed bandwidth of a carrier on the band B is 40 MHz. For another example, a minimum guaranteed bandwidth of an LTE carrier is 1.4 MHz, a minimum guaranteed bandwidth of a carrier in a band in NR FR1 is 20 MHz, and a minimum guaranteed bandwidth of a carrier in a band in NR FR2 is 50 MHz. Alternatively, a minimum guaranteed bandwidth of a carrier in the Uu link is 40 MHz, and a minimum guaranteed bandwidth of a carrier in the sidelink is 20 MHz. Alternatively, a minimum guaranteed bandwidth of an eMBB carrier is 40 MHz, a minimum guaranteed bandwidth of an NR V2X carrier is 40 MHz, a minimum guaranteed bandwidth of an LTE V2X carrier is 20 MHz, and a minimum guaranteed bandwidth of an mIoT carrier is 5 MHz, a minimum guaranteed bandwidth of a URLLC carrier is 20 MHz, or the like.

It should be noted that the minimum guaranteed bandwidth of the carrier may be zero. When the minimum guaranteed bandwidth of the carrier is 0, it indicates that the terminal device does not reserve the spectrum processing resource for the carrier.

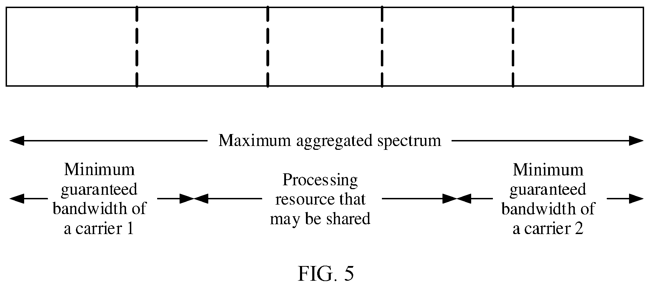

FIG. 5 is a schematic diagram of a maximum aggregated spectrum supported by the terminal device according to an embodiment of this application. In FIG. 5, the terminal device works in an LTE-NR dual connectivity mode, and one LTE carrier 1 and one NR carrier 2 are configured or activated for the terminal device. A minimum guaranteed bandwidth of the carrier 1 is 10 MHz, a bandwidth of the carrier 2 is 40 MHz, and the maximum aggregated spectrum is 100 MHz. In this case, a spectrum processing resource that can be shared by the terminal device is: 100 MHz - 10 MHz - 40 MHz = 50 MHz. The carrier 2 may be scheduled to a maximum of 90 MHz, and the carrier 1 may be scheduled over 10 MHz. For example, the carrier 1 may be scheduled to a maximum bandwidth 20 MHz of LTE.

It should be noted that the terminal device reserves a corresponding minimum guaranteed bandwidth only when the carrier takes effect.

For example, the terminal device supports aggregation of carriers in the band A and the band B, the maximum aggregated spectrum of the terminal device is 100 MHz, the minimum guaranteed bandwidth of the terminal device on a carrier A in the band A is 10 MHz, and a minimum guaranteed bandwidth of the terminal device on a carrier B in the band B is 20 MHz.

When the carrier A does not take effect and the carrier B takes effect, a total spectrum processing resource that may be used by the terminal device for the carrier B is 100 MHz.

When the carrier B does not take effect and the carrier A takes effect, a shared spectrum processing resource that may be used by the terminal device for the carrier A is 100 MHz.

When both the carrier A and the carrier B take effect, a maximum spectrum processing resource that may be used by the terminal device to simultaneously process the carrier A and the carrier B is 100 MHz. A spectrum processing resource that may be shared by the terminal device is 70 MHz (100 MHz - 10 MHz - 20 MHz). A maximum spectrum processing resource that maybe used by the terminal device to process the carrier A is 80 MHz (100 MHz - 20 MHz). A maximum spectrum processing resource that may be used by the terminal device to process the carrier B is 90 MHz (100 MHz - 10 MHz).

In a possible implementation, the capability information of the terminal device further includes whether the terminal device supports adjustment of the minimum guaranteed bandwidth corresponding to the carrier.

For example, the terminal device adjusts, based on a specific scenario, the minimum bandwidth corresponding to the carrier. For example, the terminal device supports carrier aggregation of the carrier A and the carrier B. A maximum channel bandwidth of the carrier A is 100 MHz. A maximum channel bandwidth of the carrier B is 100 MHz. The maximum aggregated spectrum of the terminal device is 100 MHz. The terminal device may determine that a minimum guaranteed bandwidth of a primary carrier is 40 MHz and a minimum guaranteed bandwidth of a secondary carrier is 0 MHz. The primary carrier has a maximum of 100 MHz spectrum for data transmission. The secondary carrier has a maximum of 60 MHz (100 MHz - 40 MHz) spectrum for data transmission. When the carrier A is the primary carrier of the terminal device, the minimum guaranteed bandwidth of the carrier A is 40 MHz, the carrier A may have 100 MHz for data transmission, and the carrier B may have a maximum of 60 MHz for data transmission. If the carrier A is updated from the primary carrier to the secondary carrier, and the guaranteed bandwidth of the carrier A is 0, the carrier A may have a maximum of 60 MHz for data transmission.

If the terminal device supports adjustment of the minimum guaranteed bandwidth corresponding to the carrier, resource utilization may be improved when an application scenario changes.

It should be noted that, when the minimum guaranteed bandwidth is independently determined by the terminal device, the terminal device needs to send the minimum guaranteed bandwidth to the network device, or when the minimum guaranteed bandwidth is determined according to a predefined rule, the terminal device does not need to report the minimum guaranteed bandwidth.

To reduce scheduling complexity of the terminal device and the network device and reduce signaling load, the terminal device may set a first granularity of a capability. A unit of the first granularity may be MHz, Hz, GHz, or the like. For example, the first granularity is 5 MHz or 10 MHz. Alternatively, the unit of the first granularity may be another unit, for example, a unit of an RB or an RBG. The first granularity may be determined according to a predefined rule, for example, it is specified that a size of the first granularity is 5 MHz. The first granularity may alternatively be determined by the terminal device based on the capability of the terminal. It may be understood that when a value of the first granularity is large, the scheduling complexity of the network device is reduced, and the signaling load is low. When the value of the first granularity is small, the terminal device has greater flexibility.

In a possible implementation, a maximum spectrum aggregation capability of the terminal device is represented by a quantity of second granularities. The second granularity is an integer multiple of the first granularity or is the same as the first granularity. For example, the terminal device determines that the size of the first granularity is 10 MHz and the second granularity is 20 MHz. Information about the maximum spectrum aggregation capability is defined by using two second granularities, that is, an integer multiple of 20 MHz. In this case, when the terminal device determines the maximum aggregated spectrum, a value of the maximum aggregated spectrum may be represented as the integer multiple of 20 MHz, for example, the maximum aggregated spectrum is 80 MHz or 100 MHz.

It may be understood that the terminal device may further determine a third granularity of the shared spectrum processing resource. The third granularity is an integer multiple of the first granularity or is the same as the first granularity. For example, if the third granularity is equal to the first granularity, and the first granularity is 20 MHz, the third granularity of the spectrum processing resource that may be shared by the terminal device in the first range is 20 MHz, the maximum aggregated spectrum supported by the terminal device in the first range is 100 MHz, and the terminal device supports carrier aggregation of two carriers. In this case, a combination {carrier 1, carrier 2} of spectrum processing resources that may be supported by the terminal device = {(0, 20), (0, 40), (0, 60), (0, 80), (0, 100), (20, 0), (20, 20), (20, 40) (20, 60) (20, 80) (40, 0) (40, 20), (40, 40), (40, 60), (60, 0) (60, 20), (60, 40), (80, 0) (80, 20), (100, 0)}. A unit of the combination of the spectrum processing resources is MHz.

In a possible implementation, the capability information of the terminal device further includes third indication information. The third indication information indicates that the terminal device supports scheduling of a plurality of non-contiguous resource units (resource units, RUs) on the carrier in the first range. That is, the terminal device supports scheduling of a plurality of non-contiguous resource units on one carrier. A sum of total schedulable non-contiguous resource units in the aggregated carrier in the first range is less than or equal to the maximum aggregated spectrum. A size of the resource unit may be determined according to a predefined rule. For example, the size of the resource unit is 5 MHz. Alternatively, the size of the resource unit is a size of a frequency domain block on which same precoding is used. For example, the size of the resource unit is one or more resource block groups (resource block groups, RBGs). Alternatively, the size of the resource unit may be determined based on the capability of the terminal device. Preferably, the size of the resource unit is equal to the first granularity or an integer multiple of the first granularity.

In a possible implementation, the third indication information indicates that the terminal device supports scheduling of the plurality of non-contiguous resource units on the carrier in the first range, and a sum of a plurality of schedulable non-contiguous resource units on the carrier in the first range is less than or equal to the maximum aggregated spectrum.

In a possible implementation, in all carriers supported by the terminal device in the first range, at least one carrier includes non-contiguous resource units. For example, in all the carriers supported by the terminal device in the first range, each carrier includes non-contiguous resource units. Alternatively, in five carriers supported by the terminal device in the first range, two carriers each include non-contiguous resource units.

In a possible implementation, the third indication information further includes at least one piece of the following information: a first granularity value, a second granularity value, a third granularity value, and the size of the resource unit.

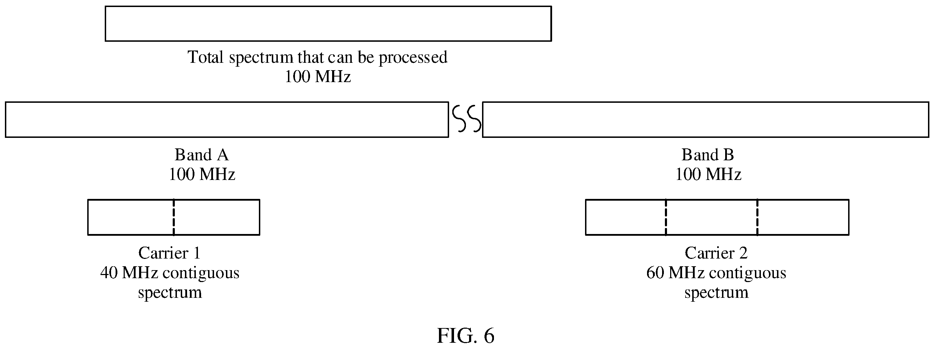

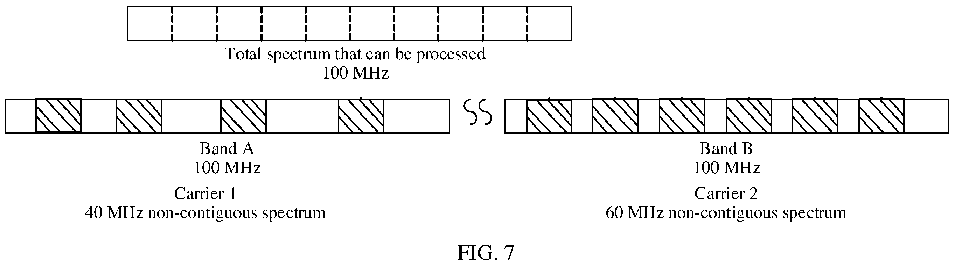

To reduce scheduling complexity of the terminal device and the network device, the terminal device determines to support intra-carrier contiguous spectrum processing. As shown in FIG. 6, the maximum aggregated spectrum supported by the terminal device in the first range is 100 MHz. A bandwidth corresponding to the carrier 1 activated by the terminal device in the band A is a contiguous 40 MHz spectrum. A bandwidth corresponding to the carrier 2 activated by the terminal device in the band B is a contiguous 60 MHz spectrum. A sum of the bandwidth corresponding to the carrier 1 and the bandwidth corresponding to the carrier 2 is equal to the maximum aggregated spectrum. To improve system performance and make full use of a diversity gain, the terminal device determines to support processing of the plurality of non-contiguous resource units on the carrier in the first range. A value of the non-contiguous resource unit may be a minimum granularity of the maximum spectrum aggregation capability, or may be another value. As shown in FIG. 7, the terminal device supports carrier aggregation in the band A and the band B in the first range. The maximum aggregated spectrum supported in the first range is 100 MHz. The size of the resource unit is 10 MHz. The carrier 1 activated by the terminal device in the band A may schedule two non-contiguous resource units in frequency domain, and a total spectrum of four resource units is 40 MHz. Six non-contiguous resource units in frequency domain may be scheduled in the activated carrier 2 in the band B, and a total spectrum of the six resource units is 60 MHz.

It should be noted that, in this embodiment provided in this application, the carriers supported by the terminal device may include carriers with contiguous spectrums, or may include carriers with non-contiguous spectrums. This is not limited herein.

It should be noted that sizes of resource units of all carriers of the terminal device may be the same or may be different. When the sizes of the resource units of all the carriers are the same, design and implementation of the terminal device are simple and easy. When the sizes of the resource units of all the carriers are different, the network device may determine different sizes of the resource units for different types of terminal devices. This can improve resource scheduling flexibility of the network device.

It should be noted that the carrier aggregation described in this embodiment provided in this application is carrier aggregation in a broad sense. Any two or more carriers used for data transmission at the same time are referred to as carrier aggregation of these carriers, regardless of whether these carriers are in a same band (for example, one is in the band A and the other is in the band B), whether these carriers are in a same air interface protocol (for example, may be respectively in an LTE air interface or an NR air interface), and whether these carriers are in a same connection (for example, may be respectively in two different NR connections), or whether these carriers are in a same link (for example, are respectively in the Uu link and the sidelink).

In a possible implementation, the capability information of the terminal device further includes fifth indication information. The fifth indication information indicates a maximum quantity of aggregation layers of the terminal device in the first range.

The maximum quantity of aggregation layers supported by the terminal device in the first range may be represented according to the following formula:

$$\text{Aggregation layer} < \max(\sum_{j=1}^{J} v^{(j)}, \text{for all supported bands or band combinations})$$

$v^{(j)}$ indicates a maximum quantity of MIMO layers of the carrier j. J indicates a total quantity of aggregated carriers that are in the band or band combination and that are on the carriers in the first range.

It should be noted that, in this embodiment of this application, the capability information may include a specific value of the maximum aggregated spectrum, or may include a scaling factor. The scaling factor is used to determine the maximum aggregated spectrum.

For example, when the capability information includes the scaling factor, after receiving the capability information reported by the terminal device, the network device calculates the maximum aggregated spectrum of the terminal device according to the following formula:

$$\text{Maximum aggregated spectrum}=\text{Scaling factor}*\max(\sum_{j=1}^{J} BW^{(j)}, \text{for all supported bands or band combinations})$$

$BW^{(j)}$ indicates the maximum bandwidth of the carrier j. Alternatively, the maximum aggregated spectrum of the terminal device may be represented according to the following formula:

$$\text{Maximum aggregated spectrum}=\text{Scaling factor}*\max(\sum_{j=1}^{J} N_{PRB}^{BW(j),\mu}, \text{for all supported bands or band combinations})$$

$N_{PRB}^{BW(j),\mu}$ indicates a maximum resource block corresponding to the carrier j.

It may be understood that the maximum aggregated spectrum of the terminal device may alternatively be calculated according to another formula. This is not specifically limited herein.

The terminal device determines the capability information of the terminal device. The capability information specifically includes capability information of the terminal device for supporting the maximum aggregated spectrum in the at least one first range. The terminal device may determine more than one first frequency range. The capability information for the maximum aggregated spectrum supported in each first frequency range may be the same or may be different. As shown in Table 8 below, it indicates that the terminal device has a capability for supporting three first ranges. A corresponding maximum aggregated spectrum is defined in each first range.

**Table 8 Schematic table of a correspondence between a first range and a maximum aggregated spectrum**

| First range | Maximum aggregated spectrum | Description |
|---|---|---|
| Uu Link | 100 MHz | Indicates that a total spectrum processing capability of carriers in all Uu link bands or band combinations supported by a terminal device is 100 MHz. A 100 MHz spectrum processing capability may be shared between all carriers that are in the band or band combination supported by the terminal device and that are used for the Uu link. |
| Sidelink | 40 MHz | Indicates that a total spectrum processing capability of carriers in all sidelink bands or band combinations supported by the terminal is 40 MHz. A 40 MHz spectrum processing capability may be shared between all carriers that are in the band or band combination supported by the terminal device and that are used for the sidelink. |
| Uu link and sidelink | 120 MHz | Indicates that a total spectrum processing capability of carriers in all Uu link bands or band combinations and all sidelink bands or band combinations supported by the terminal is 120 MHz. A 120 MHz spectrum processing capability may be shared between all carriers that are in the band or band combination supported by the terminal device and that are used for the Uu link and the sidelink. |

Step 202: The terminal device sends the capability information to the network device.

After the terminal device determines the capability information, the terminal device sends the capability information to the network device.

In a possible implementation, the terminal device sends the capability information to the network device by using higher layer signaling in a manner of reporting the capability information of the terminal device. In an initial access process of the terminal device, the terminal device sends the capability information to the network device in the capability information reporting manner. For example, the terminal device sends the capability information to the network device by using RRC configuration signaling.

Further, when the terminal device sends the capability information to the network device, the capability information may be represented in a plurality of different implementations. For example, the maximum aggregated spectrum that is in the first range and that is included in the capability information may be reported in the following format: CA-AggregatedSpectrum::=ENUMERATED{40MHz,50MHz,150MHz,200MHz,250MHz,300MHz,...}

Optionally, the reporting format of the maximum aggregated spectrum may alternatively be represented by using a resource block. In this case, corresponding to different subcarrier spacings, quantities of resource blocks may be different. For example, for a subcarrier spacing of 30 kHz, the maximum aggregated spectrum that is in the first range and that is included in the capability information may be reported in the following format: CA-AggregatedSpectrum::=ENUMERATED{25RB,50RB,65RB,135RB,273RB,...}

For a subcarrier spacing of 15 kHz, the maximum aggregated spectrum that is in the first range and that is included in the capability information may be reported in the following format: CA-AggregatedSpectrum::=ENUMERATED{12RB,25RB,50RB,135RB,...}

In a possible implementation, the terminal device may further represent the capability information for the maximum aggregated spectrum in the capability information by reporting the scaling factor, for example: CA-AggregatedSpectrumFactor::=ENUMERATED{0.4,0.5,0.6,0.7,0.8,0.9,...}

Values of the maximum aggregated spectrum may be different in different first ranges, and may be respectively represented by using different information elements.

It may be understood that the terminal device reports the capability information to the network device in a plurality of manners. This is not specifically limited herein.

The terminal device sending the capability information to the network device further includes: The network device receives the capability information sent by the terminal device to the network device.

Further, in a possible implementation, this embodiment further includes step 203. In the step 203, the network device determines a first frequency domain resource in the first range based on the capability information.

After the network device receives the capability information reported by the terminal device, the network device determines the scheduled first frequency domain resource in the first range based on the capability information.

Specifically, when determining the first frequency domain resource that needs to be scheduled, the network device ensures that the scheduled first frequency domain resource in the first range does not exceed a maximum aggregated spectrum, that is used for carrier aggregation, that is supported by the terminal device in the first range, and that is indicated in the capability information.

In a possible implementation, the network device configures channel bandwidths of all carriers that undergo carrier aggregation in the first range, and the network device determines that a sum of channel bandwidths of all configured carriers in the first range does not exceed the maximum aggregated spectrum indicated in the capability information.

In a possible implementation, the network device activates bandwidths of activated BWPs of all carriers in the first range, and determines that a sum of channel bandwidths of all activated BWPs in the first range does not exceed the maximum aggregated spectrum indicated in the capability information.

In a possible implementation, the network device configures channel bandwidths of BWPs of configured carriers in the first range, and the network device determines that a sum of maximum BWP values of all configured carriers does not exceed the maximum aggregated spectrum indicated in the capability information. For example, the network device configures N carriers. N is a positive integer greater than or equal to 1, and one or more BWPs are configured for each carrier. In this case, $\sum_{j=1}^{N}\max${$BWP_{j,i}$,BWP values of configured carrier} does not exceed the maximum aggregated spectrum indicated in the capability information.

In a possible implementation, the network device determines the first frequency range based on the capability information and the effective carrier. For example, the network device learns, from the capability information reported by the terminal device, that the maximum aggregated spectrum supported by the terminal device in the first range is 100 MHz. In a network of an operator 1, a spectrum allocated to the operator in the band A in the first range is 40 MHz, and a spectrum allocated to the operator in the band B is 60 MHz. The network device configures two carriers for the terminal device in the network of the operator 1. The carrier 1 is in the band A, and a maximum BWP of the carrier 1 is 40 MHz. The carrier 2 is in the band B, and a maximum BWP of the carrier 2 is 60 MHz. In a network of an operator 2, a spectrum allocated to the operator 2 in the band A in the first range is 80 MHz, and a spectrum allocated to the operator 2 in the band B is 40 MHz. The network device configures two carriers for the terminal device in the network of the operator 2. The carrier 1 is in the band A, and a maximum BWP of the carrier 1 is 60 MHz. The carrier 2 is in the band B, and a maximum BWP of the carrier 2 is 40 MHz. That is, regardless of the network of the operator 1 or the operator 2, a sum of maximum BWPs of carriers configured by the network device for the terminal device does not exceed the maximum aggregated spectrum indicated in the capability information reported by the terminal device.

In a possible implementation, the network device further determines, based on the first indication information in the capability information, a size of the first range that needs to be scheduled, to determine the carrier that needs to be configured.

For example, the network device determines, based on the first indication information, that the first range is the Uu link and the sidelink. The maximum aggregated spectrum supported in the first range is 100 MHz. If the network device does not configure the sidelink for the terminal device, the network device configures the carrier 1 for the terminal device. A bandwidth of the carrier 1 is less than or equal to 100 MHz. If the network device configures both the Uu link and the sidelink for the terminal device, a bandwidth of the carrier 1 in the Uu link is less than or equal to 60 MHz, and a bandwidth of the carrier 2 in the sidelink is less than or equal to 40 MHz. A total configured bandwidth of the carrier 1 in the Uu link and the carrier 2 in the sidelink does not exceed 100 MHz.

In a possible implementation, the network device further determines the first frequency domain resource in the first range based on the second indication information in the capability information.

Specifically, the network device determines the minimum guaranteed bandwidth of each carrier in the first range based on the second indication information in the capability information. When configuring the first frequency domain resource for the terminal device, the network device determines that the frequency domain resource that may be shared by the carrier does not exceed the maximum aggregated spectrum minus a sum of minimum guaranteed bandwidths of the effective carriers.

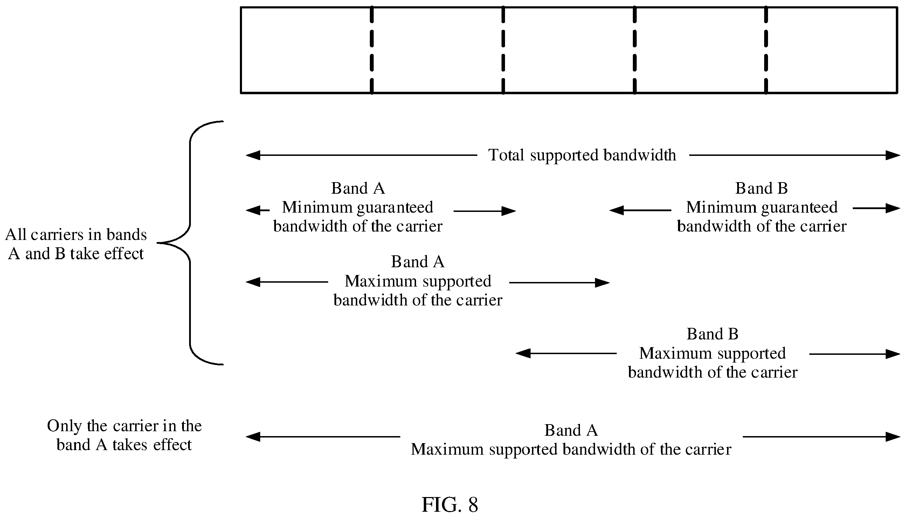

FIG. 8 is a schematic diagram of another maximum aggregated spectrum supported by the terminal device according to an embodiment of this application. In FIG. 8, the network device learns, based on the capability information reported by the terminal device, that the band A and the band B may share the frequency domain resource. When only the carrier in the band A takes effect, a bandwidth that may be configured by the network device for the effective carrier in the band A is less than or equal to the maximum aggregated spectrum. When both the carrier in the band A and the carrier in the band B take effect, a bandwidth that may be configured by the network device for the carrier in the band A is less than or equal to the maximum aggregated spectrum minus the minimum guaranteed bandwidth of the carrier in the band B, and a bandwidth that may be configured by the network device for the carrier in the band B is less than or equal to the maximum aggregated spectrum minus the minimum guaranteed bandwidth of the carrier in the band A.

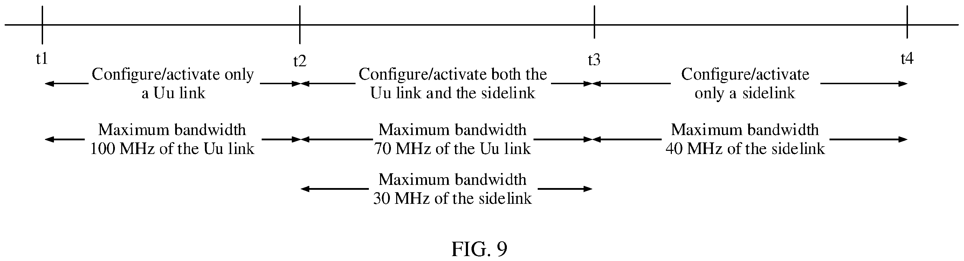

FIG. 9 is a schematic diagram of another maximum aggregated spectrum supported by the terminal device according to an embodiment of this application. In FIG. 9, the network device learns, based on the capability information reported by the terminal device, that the Uu link and the sidelink may share the frequency domain resource. In a time period from t1 to t2, when only the carrier in the Uu link takes effect, a bandwidth that may be configured by the network device for the effective carrier in the Uu link is less than or equal to the maximum aggregated spectrum. In a time period from t2 to t3, when both the carrier in the Uu link and the carrier in the sidelink take effect, a bandwidth that may be configured by the network device for the carrier in the Uu link is less than or equal to the maximum aggregated spectrum minus the minimum guaranteed bandwidth of the carrier in the sidelink, and a bandwidth that is configured by the network device for the carrier in the sidelink is less than or equal to the maximum aggregated spectrum minus the minimum guaranteed bandwidth of the carrier in the Uu link. In the time period from t2 to t3, when only the carrier in the sidelink takes effect, a bandwidth that may be configured by the network device for the effective carrier in the sidelink is less than or equal to the maximum aggregated spectrum. As shown in FIG. 9, the minimum guaranteed bandwidth of the Uu link is 40 MHz, the minimum guaranteed bandwidth of the sidelink is 20 MHz, and the maximum aggregated spectrum is 100 MHz. 11, t2, and t3 shown in FIG. 9 are three different time points. The sidelink and the Uu link may belong to a same band, or may belong to different bands. This is not specifically limited herein.

In an implementation shown in FIG. 9, a specific application scenario is that, in a phase in which the terminal device initially accesses a network, a total bandwidth that is obtained after carrier aggregation and that may be used by the terminal device for data transmission in the Uu link is less than or equal to the maximum aggregated spectrum. For example, the maximum aggregated spectrum is 100 MHz. After accessing the network, the terminal device activates the sidelink, and the minimum guaranteed bandwidth of the sidelink is 40 MHz. In this case, a total bandwidth that is obtained after carrier aggregation and that is used for data transmission in the Uu link is less than or equal to 60 MHz.

In a possible implementation, the network device further determines the first frequency domain resource in the first range based on the third indication information in the capability information.

Specifically, the network device determines, based on the third indication information, that a plurality of non-contiguous resource units may be configured for the carrier of the terminal device in the first range.

In a possible implementation, the network device further determines the first frequency domain resource in the first range based on the fifth indication information in the capability information.

Specifically, the network device determines, based on the fifth indication information, a total quantity of MIMO layers supported by the terminal device in the first range, and configures a total quantity of MIMO layers of each carrier, so that a sum of total quantities of MIMO layers of all the configured carriers does not exceed the maximum quantity of aggregation layers.

It may be understood that in an actual application process, the network device may further configure the first frequency domain resource based on more indication information in the capability information. This is not specifically limited herein.

After determining the first frequency domain resource, the network device generates first scheduling information based on the first frequency domain resource.

Further, in a possible implementation, this embodiment further includes step 204. In the step 204, the network device sends the first scheduling information to the terminal device.

After the network device generates the first scheduling information, the network device sends the first scheduling information to the terminal device.

In a possible implementation, the network device may carry the first scheduling information by using one or more of RRC signaling, MAC layer signaling, or physical layer signaling. The first scheduling information may be sent to the terminal device by using one piece of signaling, or may be sent to the terminal device by using a plurality of pieces of signaling. This is not specifically limited herein.

For example, the network device configures the maximum BWP of the carrier 1 to 60 MHz, and the network device configures the maximum BWP of the carrier 2 to 40 MHz. The network device carries the two pieces of configuration information by using the RRC signaling, and sends the configuration information to the terminal device.

For example, the network device configures, by using the RRC signaling, two BWPs for the carrier 1, where a bandwidth of a BWP1 is 80 MHz, and a bandwidth of a BWP2 is 60 MHz. The network device configures two BWPs for the carrier 2, where a bandwidth of a BWP3 is 20 MHz, and a bandwidth of a BWP4 is 40 MHz. The network device carries, at T1, activation signaling by using the physical layer signaling or the MAC signaling, to activate the BWP1 and the BWP3. The network device carries, at T2, activation signaling by using the physical layer signaling or the MAC signaling, to activate the BWP2 and the BWP4.

It may be understood that in an actual application process, the network device may alternatively send the first scheduling information in another manner. This is not specifically limited herein.

The network device sending the first scheduling information to the terminal device further includes: The terminal device receives the first scheduling information.

Further, in a possible implementation, this embodiment further includes step 205. In the step 205, the terminal device determines the spectrum processing resource based on the first scheduling information.

After receiving the first scheduling information, the terminal device determines, based on the first scheduling information, the first frequency domain resource scheduled by the network device. The first frequency domain resource is used by the first device to transmit data, and the first frequency domain resource is less than or equal to the maximum aggregated spectrum. After determining the first frequency domain resource, the terminal device determines the spectrum processing resource of the terminal device based on the first frequency domain resource. The spectrum processing resource includes a processing resource that is of the terminal device and that is used when the terminal device receives and/or sends data carried on the first frequency domain resource.

In a possible implementation, the terminal device determines the effective carrier in the first range based on the first frequency domain resource, and configures the corresponding spectrum processing resource based on the effective carrier. For example, if the first frequency domain resource indicates that the network device activates two carriers: the carrier 1 and the carrier 2, and the bandwidths of the carrier 1 and the carrier 2 are respectively 20 MHz and 40 MHz, the terminal device respectively allocates a 20 MHz spectrum processing resource and a 40 MHz spectrum processing resource to the carrier 1 and the carrier 2.

For example, in the first frequency domain resource, the network device configures two carriers for the terminal device. The carrier 1 is in the band A, and has a maximum BWP of 40 MHz. The carrier 2 is in the band B, and has a maximum BWP of 60 MHz. In this case, the terminal device allocates a 40 MHz spectrum processing resource to the carrier 1, and allocates a 60 MHz spectrum processing resource to the carrier 2.

In a possible implementation, when the terminal device determines, based on the first frequency domain resource, that the effective carrier in the first range includes non-contiguous resource units, the terminal device configures the corresponding spectrum processing resource based on the effective non-contiguous carrier. For example, in the first frequency domain resource, the network device configures two carriers for the terminal device, the carrier 1 includes contiguous resource units, and the carrier 2 includes non-contiguous resource units. In this case, the terminal device allocates a part of corresponding spectrum processing resource to the carrier 1, and respectively allocates corresponding spectrum processing resources to the non-contiguous resource units on the carrier 2.

In a possible implementation, after determining the first frequency domain resource, the terminal device learns that the first frequency domain resource indicates that spectrums simultaneously received and/or transmitted in the first range exceed the maximum aggregated spectrum supported by the terminal device in the first range. In this case, the terminal device determines that an error occurs in the first scheduling information, and the terminal device may discard the first scheduling information, or send, to the network device, a prompt indicating that the error occurs in the first scheduling information. It may be understood that the terminal device may further determine, based on the maximum aggregated spectrum supported by the terminal device, not to receive and/or send data corresponding to a spectrum that is in the first frequency domain resource and that exceeds the maximum aggregated spectrum. This is not specifically limited herein.

In this embodiment of this application, the maximum aggregated spectrum supported by the terminal device is less than the sum of the maximum bandwidths corresponding to all carriers in the bands or band combinations in the first range. This reduces a spectrum processing capability that needs to be designed for the terminal device, and helps reduce costs of the terminal device.

2. The first device reports capability update.

This embodiment describes an example in which the first device is the terminal device and the second device is the network device. In this embodiment of this application, after the first device reports the capability information, the corresponding capability information changes. When the capability information of the terminal device changes for a plurality of reasons, the reason may be a change of the terminal device in different air interface protocols, or may be a change of an application scenario to cause the change of the capability information.

Update of the capability information includes update of one or more pieces of information in the capability information described in Embodiment 1, for example, update of the maximum aggregated spectrum, update of the first range, and update of the third indication information. Herein, an example in which the terminal device updates the first range is used for description. A procedure of updating another information in the capability information reported by the terminal device is similar to a procedure of updating the first range, and is not described one by one.

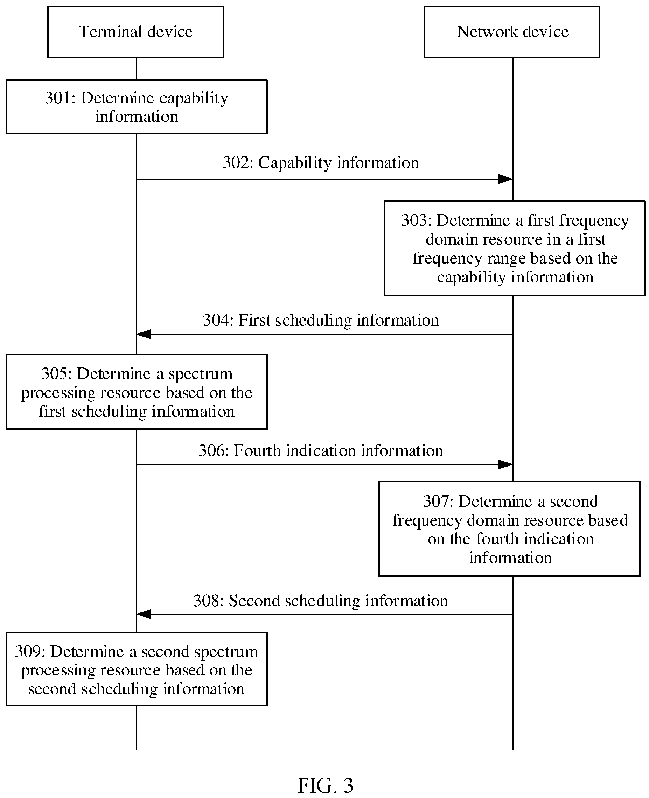

FIG. 3 is a schematic flowchart of another capability information reporting method according to an embodiment of this application.

Step 301: A terminal device determines capability information.

Step 302: The terminal device sends the capability information to a network device.

Step 303: The network device determines a first frequency domain resource in a first range based on the capability information.

Step 304: The network device sends first scheduling information to the terminal device.

Step 305: The terminal device determines a spectrum processing resource based on the first scheduling information.

The step 301 to the step 305 in this embodiment are similar to the step 201 to the step 205 in the embodiment in FIG. 2. Details are not described herein again.

Step 306: The terminal device sends fourth indication information to the network device.

When the capability information changes, the terminal device sends updated capability information to the network device. The terminal device may update all or some of the capability information. For example, when the first range changes, the terminal device sends the fourth indication information to the network device. The fourth indication information indicates update of the capability information of the terminal device.

The first range is determined based on a working mode of at least two carriers that may share the spectrum processing resource. The working mode is determined based on at least one of a band or band combination in which a carrier is located, a supported air interface protocol, a supported connection type, a supported link type, or a supported service type. For example, the first range is defined based on an air interface protocol supported by the terminal device and a service type supported by the terminal device, or is defined based on a link type supported by the terminal device and different connections supported by the terminal device, or is defined based on a band range supported by an operator. When the working mode changes, the first range changes. For example, when the first range is defined based on an air interface access protocol supported by the terminal device, if the terminal device supports a non-standalone (non-standalone, NSA) network and a standalone (standalone, SA) network, the terminal device supports two air interface protocols: LTE and NR in the NSA network, and the terminal device supports an NR network in the SA network. After the terminal device accesses the SA network from the NSA network, determining of the first range changes from an LTE air interface and an NR air interface to only an NR air interface. Therefore, the terminal device determines that the first range changes. Alternatively, when the first range is defined based on a band set supported by the terminal device, if the terminal device has a newly added band and/or band combination that can be supported, the terminal device determines that the first range changes. Alternatively, if the link type supported by the terminal device changes, for example, from supporting only a Uu link to supporting both a Uu link and a sidelink, the terminal device determines that the first range changes.

It may be understood that, in an actual application process, there may be more cases in which the first range changes. This is not specifically limited herein.

For example, when the first range is defined based on an air interface access protocol supported by the terminal device, if the terminal device is from an NSA (Non-standalone) network to an SA (standalone) network, the terminal supports two air interface protocols: LTE and NR in the NSA network, and the terminal device supports an NR network in the SA network. In this case, the first range changes from an LTE air interface and an NR air interface to only an NR air interface. Therefore, the terminal device needs to update the capability information, and the network device needs to reschedule a resource to perform corresponding matching. Alternatively, when the first range is defined based on a band set supported by the terminal device, if there is a newly added band and/or band combination that can be supported, the first range may change. Therefore, the terminal device needs to update the capability information, and the network device needs to reschedule a resource to perform corresponding matching. Alternatively, when the link type supported by the terminal device changes from supporting only a Uu link to supporting both a Uu link and a sidelink, the first range changes. In this case, the terminal device needs to update the capability information, and the network device needs to reschedule a resource to perform corresponding matching.

In a possible implementation, the terminal device may update the capability information to the network device in a manner of network de-registration (de-registration) and/or network detach (detach). It may be understood that the terminal device may update the capability information to the network device in another manner, for example, update the capability information in a manner of network registration (registration) and/or network attach. The terminal device updates the capability information in a manner of sending assisted information, and the like. This is not specifically limited herein.

Step 307: The network device determines a second frequency domain resource based on the fourth indication information.

After the network device receives the fourth indication information sent by the terminal device, the network device determines, based on the fourth indication information, the first range that needs to be updated, and further determines the second frequency domain resource based on an updated first range and the capability information of the terminal device. The second frequency domain resource is used for data transmission between the network device and the terminal device.

In this embodiment, a method for determining the second frequency domain resource by the network device based on the updated first range and the capability information of the terminal device is similar to a method for determining the first frequency resource by the network device based on the first range and the capability information of the terminal device in the step 203 in the embodiment in FIG. 2. Details are not described herein again.

Step 308: The network device sends second scheduling information to the terminal device.

Step 309: The terminal device determines a second spectrum processing resource based on the second scheduling information.

The step 308 and the step 309 in this embodiment are similar to the step 204 and the step 205 in the embodiment in FIG. 2. Details are not described herein again.

In this embodiment, the terminal device may explicitly carry information about the updated first range in the fourth indication information, or may not carry the information about the updated first range in the fourth indication information, but carry only an update indication message. After receiving the update indication message sent by the terminal device, the network device sends a query message to the terminal device. The query message is used to query the updated capability information of the terminal device. Alternatively, the terminal device may send the information about the updated first range to the network device by using terminal device assisted information (UE assisted information). This is not specifically limited herein.

In this embodiment of this application, the terminal device sends, to the network device, a maximum aggregated spectrum supported by the terminal device in the first range, and the maximum aggregated spectrum is less than a sum of maximum bandwidths of all aggregated carriers supported by the terminal device in the first range, so that when a capability supported by the terminal device is designed, the terminal device does not need to design a corresponding capability based on the maximum bandwidths of all supported aggregated carriers. However, a higher capability supported by the first device indicates higher corresponding costs. Therefore, reporting is performed by using the capability information reporting method provided in this embodiment of this application, so that design of excessive capabilities can be avoided in a design phase of the first device. This helps reduce costs of the first device.

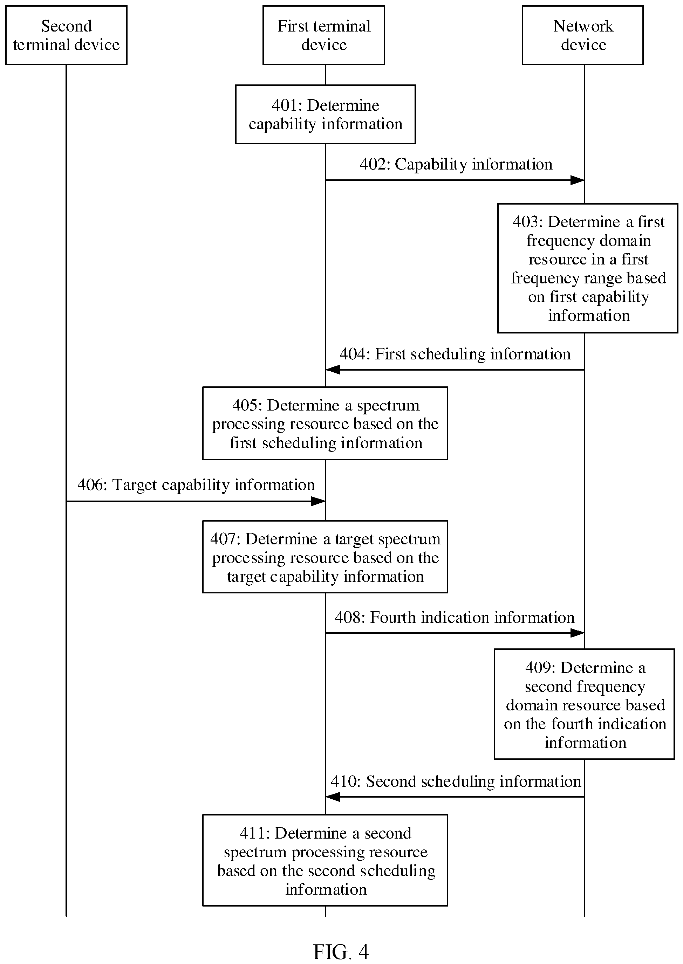

FIG. 4 is a schematic flowchart of another capability information reporting method according to an embodiment of this application.

It should be noted that, in this embodiment, when a first terminal device reports capability information to a network device, the first terminal device corresponds to a first device, and the network device corresponds to a second device. When the first terminal device receives capability information sent by a second terminal device, the first terminal device corresponds to the second device, and the second terminal device corresponds to the first device.

Step 401: The first terminal device determines the capability information.

Step 402: The first terminal device sends the capability information to the network device.

Step 403: The network device determines a first frequency domain resource in a first range based on first capability information.

Step 404: The network device sends first scheduling information to the first terminal device.

Step 405: The first terminal device determines a spectrum processing resource based on the first scheduling information.

The step 401 to the step 405 in this embodiment are similar to the step 201 to the step 205 in FIG. 2. Details are not described herein again.

Step 406: The second terminal device sends target capability information to the first terminal device.

In a special scenario mode, the second terminal device needs to send the target capability information of the second terminal device to the first terminal device. The target capability information may be used by the first terminal device and the second terminal device for direct communication.

In a possible implementation, in an idle (idle) or inactive (inactive) mode, the second terminal device and the first terminal device may directly communicate with each other through a PC5 interface by using a mode 2 (mode2) resource. However, in this case, the first terminal device is already communicating with the network device. Therefore, the second terminal device needs to send the target capability information of the second terminal device to the first terminal device. The first terminal device may avoid, based on an indication of the target capability information of the second terminal device, a subframe for receiving a message from the network device and/or sending a message to the network device, and communicate with the second terminal device.

It may be understood that, in more scenario modes, the second terminal device sends the target capability information to the first terminal device, for example, in a V2X scenario. Details are not described herein again.

In this embodiment, a method for determining the target capability information by the second terminal device is similar to a method for determining the capability information by the first terminal device in the step 401. Details are not described herein again.

Step 407: The first terminal device determines a target spectrum processing resource based on the target capability information.

After the first terminal device receives the target capability information sent by the second terminal device, the first terminal device determines, based on the target capability information, the target spectrum processing resource that may be used to communicate with the second terminal device.

After the first terminal device determines the target spectrum processing resource, the first terminal device updates the capability information of the first terminal device, and generates fourth indication information. The fourth indication information indicates that the capability information of the first terminal device changes.

Step 408: The first terminal device sends the fourth indication information to the network device.

Step 409: The network device determines a second frequency domain resource based on the fourth indication information.

Step 410: The network device sends second scheduling information to the first terminal device.

The step 408 to the step 410 in this embodiment are similar to the step 306 to the step 308 in the embodiment in FIG. 3. Details are not described herein again.

Step 411: The first terminal device determines a second spectrum processing resource based on the second scheduling information.

After receiving the second scheduling information, the first terminal device determines, based on the second scheduling information, the second frequency domain resource configured by the network device. After determining the second frequency domain resource, the first terminal device determines the second spectrum processing resource of the first terminal device based on the second frequency domain resource.

In a possible implementation, the first terminal device determines an effective carrier in an updated first range based on the second frequency domain resource, and configures the corresponding second spectrum processing resource based on the effective carrier. For example, if the second frequency domain resource indicates that the network device activates two carriers: a carrier 1 and a carrier 2, and bandwidths of the carrier 1 and the carrier 2 are respectively 20 MHz and 40 MHz, the terminal device respectively allocates a 20 MHz spectrum processing resource and a 40 MHz spectrum processing resource to the carrier 1 and the carrier 2.

For example, in the second frequency domain resource, the network device configures two carriers for the first terminal device. The carrier 1 is in a band A, and has a maximum BWP of 40 MHz. The carrier 2 is in a band B, and has a maximum BWP of 60 MHz. In this case, the first terminal device allocates a 40 MHz spectrum processing resource to the carrier 1, and allocates a 60 MHz spectrum processing resource to the carrier 2.

It should be noted that a sum of target spectrum processing resources used for communication between the first terminal device and the second terminal device and second spectrum processing resources used for communication between the first terminal device and the network device does not exceed total spectrum processing resources of the first terminal device.

In a possible implementation, after determining the second frequency domain resource, the first terminal device learns that the second frequency domain resource indicates that spectrums simultaneously received and/or transmitted in the updated first range exceed a maximum aggregated spectrum supported by the first terminal device in the updated first range. In this case, the first terminal device determines that an error occurs in the second scheduling information, and the first terminal device may discard the second scheduling information, or send, to the network device, a prompt indicating that the error occurs in the second scheduling information. It may be understood that the first terminal device may further determine, based on the maximum aggregated spectrum supported by the first terminal device, not to receive and/or send data corresponding to a spectrum that is in the first frequency domain resource and that exceeds the maximum aggregated spectrum. This is not specifically limited herein.

In this embodiment, the first terminal device may explicitly carry information about the updated first range in the fourth indication information, or may not carry the information about the updated first range in the fourth indication information, but carry only an update indication message. After receiving the update indication message sent by the first terminal device, the network device sends a query message to the first terminal device. The query message is used to query updated capability information of the first terminal device. Alternatively, the first terminal device may send the information about the updated first range to the network device by using first terminal device assisted information (UE assisted information). This is not specifically limited herein.

In this embodiment, the first terminal device may share the spectrum processing resource of the first terminal device between different carriers, thereby reducing costs of the first terminal device.

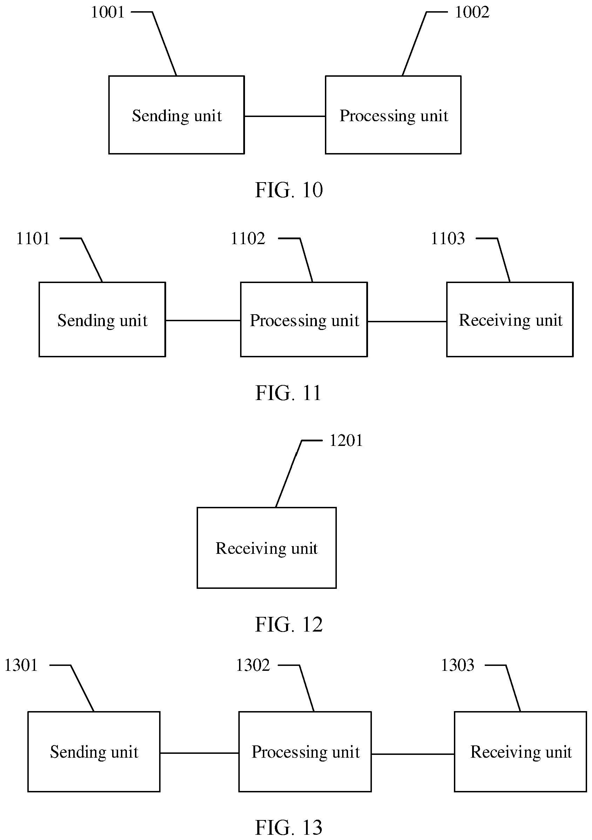

The foregoing describes the capability information reporting method in embodiments of this application, and the following describes devices in embodiments of this application. FIG. 10 is a schematic diagram of a structure of a communication apparatus according to an embodiment of this application.

The communication apparatus includes:

a processing unit 1002, configured to determine capability information of the communication apparatus, where the capability information indicates a capability of the communication apparatus for supporting a maximum aggregated spectrum in a first range, and
a sending unit 1001, configured to send the capability information.

In this embodiment, operations performed by units of the communication apparatus are similar to those of the terminal device, the second terminal device, or the first terminal device described in the embodiments shown in FIG. 2 to FIG. 4. Details are not described herein again.

It should be noted that, in the communication apparatus shown in FIG. 10, the sending unit 1001 may correspond to a transmitter, and the processing unit 1002 may correspond to a processor. In another implementation, the transmitter and the receiver may be implemented by a same component: a transceiver.

FIG. 11 is a schematic diagram of a structure of another communication apparatus according to an embodiment of this application.

The communication apparatus includes:

a processing unit 1102, configured to determine capability information of the communication apparatus, where the capability information indicates capability information of the communication apparatus for supporting a maximum aggregated spectrum in a first range; and
a sending unit 1101, configured to send the capability information.

Optionally, the maximum aggregated spectrum is less than a first bandwidth. The first bandwidth is a sum of maximum bandwidths of all aggregated carriers supported by the communication apparatus in the first range.

Optionally, the capability information includes first indication information. The first indication information indicates the first range of the communication apparatus.

Optionally, the capability information further includes second indication information. The second indication information indicates a minimum guaranteed bandwidth of a carrier of the communication apparatus in the first range.

Optionally, the capability information includes third indication information. The third indication information indicates that the communication apparatus supports scheduling of a plurality of resource units in the first range. A sum of the plurality of resource units is less than or equal to the maximum aggregated spectrum.

Optionally, at least one of all carriers supported by the communication apparatus in the first range includes non-contiguous resource units.

Optionally, the communication apparatus further includes:

a receiving unit 1103, configured to receive first scheduling information. The first scheduling information determines a first frequency domain resource in the first range. The first frequency domain resource is used for data transmission of the communication apparatus. The first frequency domain resource is less than or equal to the maximum aggregated spectrum.

Optionally, the processing unit 1102 is further configured to determine the first frequency domain resource based on the first scheduling information.

The processing unit 1102 is further configured to determine a spectrum processing resource of the communication apparatus based on the first frequency domain resource. The spectrum processing resource includes a processing resource used when the communication apparatus receives data carried on the first frequency domain resource, and/or

a processing resource used when the communication apparatus sends the data carried on the first frequency domain resource.

Optionally, the sending unit 1101 is further configured to send fourth indication information. The fourth indication information indicates update of the capability information of the communication apparatus.

Optionally, the capability information includes a scaling factor. The scaling factor is used to determine the maximum aggregated spectrum.

In this embodiment, operations performed by units of the communication apparatus are similar to those of the terminal device, the second terminal device, or the first terminal device described in the embodiments shown in FIG. 2 to FIG. 4. Details are not described herein again.

It should be noted that, in the communication apparatus shown in FIG. 11, the sending unit 1101 may correspond to a transmitter, the receiving unit 1103 may correspond to a receiver, and the processing unit 1102 may correspond to a processor. In another implementation, the transmitter and the receiver may be implemented by a same component: a transceiver.

FIG. 12 is a schematic diagram of a structure of another communication apparatus according to an embodiment of this application.

The communication apparatus includes:

a receiving unit 1201, configured to receive capability information of the communication apparatus. The capability information indicates a maximum aggregated spectrum supported by the communication apparatus in a first range.

In this embodiment, operations performed by units of the communication apparatus are similar to those of the first terminal device or the network device described in the embodiments shown in FIG. 2 to FIG. 4. Details are not described herein again.

It should be noted that the receiving unit 1201 in the communication apparatus shown in FIG. 12 may correspond to a receiver. In another implementation, a transmitter and the receiver may be implemented by a same component: a transceiver.

FIG. 13 is a schematic diagram of a structure of another communication apparatus according to an embodiment of this application.

The communication apparatus includes:

a receiving unit 1303, configured to receive capability information of the communication apparatus. The capability information indicates a maximum aggregated spectrum supported by the communication apparatus in a first range.

Optionally, the maximum aggregated spectrum is less than a first bandwidth. The first bandwidth is a sum of maximum bandwidths corresponding to all aggregated carriers supported by the communication apparatus in the first range.

Optionally, the capability information includes first indication information. The first indication information indicates the first range of the communication apparatus.

Optionally, the capability information further includes second indication information. The second indication information indicates a minimum guaranteed bandwidth of a carrier in the first range.

Optionally, the capability information includes third indication information. The third indication information indicates that the communication apparatus supports scheduling of a plurality of resource units in the first range. A sum of the plurality of resource units is less than or equal to the maximum aggregated spectrum.

Optionally, at least one of all carriers supported by the communication apparatus in the first range includes non-contiguous resource units.

Optionally, the communication apparatus further includes:

a processing unit 1302, configured to determine a first frequency domain resource in the first range based on the capability information. The first frequency domain resource is used for data transmission of the communication apparatus. The first frequency domain resource is less than or equal to the maximum aggregated spectrum.

The communication apparatus further includes:

a sending unit 1301, configured to send first scheduling information. The first scheduling information determines the first frequency domain resource.

Optionally, the receiving unit 1303 is further configured to receive fourth indication information, where the fourth indication information indicates update of the capability information;

the processing unit 1302 is further configured to determine a second frequency domain resource based on the fourth indication information, where the second frequency domain resource is used for data transmission; and

the sending unit 1301 is further configured to send second scheduling information. The second scheduling information includes information about the second frequency domain resource.

Optionally, the capability information includes a scaling factor. The scaling factor is used to determine the maximum aggregated spectrum.

In this embodiment, operations performed by units of the communication apparatus are similar to those of the first terminal device or the network device described in the embodiments shown in FIG. 2 to FIG. 4. Details are not described herein again.

It should be noted that, in the communication apparatus shown in FIG. 13, the sending unit 1301 may correspond to a transmitter, the receiving unit 1303 may correspond to a receiver, and the processing unit 1302 may correspond to a processor. In another implementation, the transmitter and the receiver may be implemented by a same component: a transceiver.

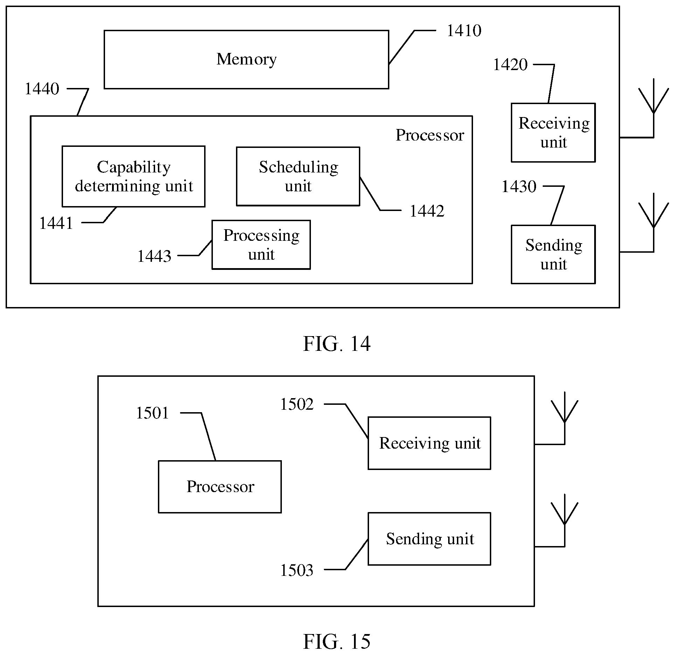

FIG. 14 is a schematic diagram of a structure of a terminal device according to an embodiment of this application.

The terminal device includes:

a processor 1440, a memory 1410, a receiving unit 1420, and a sending unit 1430. The processor 1440 is connected to the memory 1410, the receiving unit 1420, and the sending unit 1430. The receiving unit 1420 is configured to receive data. The sending unit 1430 is configured to send data. The memory 1410 is configured to store data. The processor 1440 is a single-core or multi-core central processing unit or an application-specific integrated circuit, or may be configured as one or more integrated circuits for implementing this embodiment provided in this application. The memory 1410 may be a random access memory (random access memory, RAM), or may be a non-volatile memory (non-volatile memory), for example, at least one hard disk memory. The memory 1410 is configured to store execution instructions and data information.

Specifically, the memory 1410 may be configured to store capability information of a terminal device.

The processor 1440 further includes a capability determining unit 1441, a scheduling unit 1442, and a processing unit 1443. The capability determining unit 1441 is configured to generate a report message based on the capability information of the terminal device that is stored in the memory, and then send the report message to a network device by using the sending unit 1430.

The scheduling unit 1442 is configured to determine, based on a first frequency domain resource in first scheduling information sent by the network device, a processing unit corresponding to each frequency domain block in the first frequency domain resource.

The processing unit 1443 is configured to process downlink data and/or uplink data carried on the frequency domain block.

It may be understood that, in this embodiment, a quantity of specific units is not limited. For example, there may be a plurality of processors 1440 in an actual application process, or the processor 1440 includes a plurality of processing units 1443. This is not limited herein.

In this embodiment, when the processor 1440 invokes the execution instructions, the terminal device in FIG. 14 may be enabled to perform the operations performed by the terminal device, the second terminal device, or the first terminal device in the embodiments shown in FIG. 2 to FIG. 4. Details are not described herein again.

FIG. 15 is a schematic diagram of a structure of another communication apparatus according to an embodiment of this application.

The communication apparatus includes:

a processor 1501, a receiving unit 1502, and a sending unit 1503. The processor 1501 is connected to the receiving unit 1502 and the sending unit 1503. The receiving unit 1502 is configured to receive data. The sending unit 1503 is configured to send data. The processor 1501 is a single-core or multi-core central processing unit or an application-specific integrated circuit, or is configured as one or more integrated circuits for implementing this embodiment provided in this application.

Specifically, in a possible implementation, the processor 1501 is configured to: obtain capability information of a terminal from data received by the receiving unit 1502, generate first scheduling information based on the capability information of the terminal, and send the first scheduling information to a terminal device by using the sending unit 1503.

In this embodiment, the processor 1501, the receiving unit 1502, and the sending unit 1503 work together, so that the communication apparatus shown in FIG. 15 can perform the operations performed by the network device or the first terminal device in the embodiments shown in FIG. 2 to FIG. 4. Details are not described herein again.

It should be noted that, in the communication apparatus shown in FIG. 15, the sending unit 1503 may correspond to a transmitter, the receiving unit 1502 may correspond to a receiver, and the processing unit 1501 may correspond to a processor. In another implementation, the transmitter and the receiver may be implemented by a same component: a transceiver.

It should be understood that the processor mentioned in the foregoing embodiments of this application, or the processor provided in the foregoing embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that there may be one or more processors in the foregoing embodiments of this application. This may be adjusted based on an actual application scenario. This is merely an example for description herein, and is not limited. There may be one or more memories in embodiments of this application. This may be adjusted based on an actual application scenario. This is merely an example for description herein, and is not limited.

It should be noted that when the communication apparatus, the terminal device, or the network device includes a processor (or a processing unit) and a storage unit, the processor in this application may be integrated with the storage unit, or the processor may be connected to the storage unit through an interface. This may be adjusted based on an actual application scenario. This is not limited.

The processor in this embodiment of this application may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code and/or data. Alternatively, the transceiver circuit, the interface, or the interface circuit may be configured to transmit or transfer a signal.

An embodiment of this application further provides a computer program or a computer program product including the computer program. When the computer program is executed on a computer, the computer is enabled to implement the method procedure performed by the terminal device and/or the network device in any one of the foregoing method embodiments.

An embodiment of this application further provides a computer-readable storage medium. The computer-readable storage medium stores a computer program. When the computer program is executed by a computer, the method procedure related to the communication apparatus, the terminal device or the network device in any one of the foregoing method embodiments is implemented.

All or some of the foregoing embodiments in FIG. 2 to FIG. 4 may be implemented by using software, hardware, firmware, or any combination thereof. When the software is used to implement embodiments, all or some of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In the several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

Terms used in embodiments of this application are merely for the purpose of describing specific embodiments, but are not intended to limit the embodiments provided in this application. Terms "a", "the", and "this" of singular forms used in embodiments of this application are also intended to include plural forms, unless otherwise specified in a context clearly. It should be further understood that, in the descriptions of this application, "/" represents an "or" relationship between associated objects, unless otherwise specified. For example, A/B may represent A or B. A term "and/or" in this application is merely an association relationship between associated objects, and represents that three relationships may exist. For example, A and/or B may represent the following three cases: Only A exists, both A and B exist, and only B exists, where A and B each may be singular or plural.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

**Claims**

1. A capability information reporting method, comprising:

   determining, by a first device, capability information of the first device, wherein the capability information indicates a capability of the first device for supporting a maximum aggregated spectrum in a first range; and
   sending, by the first device, the capability information.

2. The method according to claim 1, wherein the maximum aggregated spectrum is less than a first bandwidth, and the first bandwidth is a sum of maximum bandwidths of all aggregated carriers supported by the first device in the first range.

3. The method according to claim 1 or 2, wherein the capability information comprises first indication information, and the first indication information indicates the first range of the first device.

4. The method according to any one of claims 1 to 3, wherein the capability information further comprises second indication information, and the second indication information indicates a minimum guaranteed bandwidth of a carrier of the first device in the first range.

5. The method according to any one of claims 1 to 4, wherein the capability information comprises third indication information, the third indication information indicates that the first device supports scheduling of a plurality of resource units in the first range, and a sum of the plurality of resource units is less than or equal to the maximum aggregated spectrum.

6. The method according to claim 5, wherein at least one of all carriers supported by the first device in the first range comprises non-contiguous resource units.

7. The method according to any one of claims 1 to 6, wherein after the sending, by the first device, the capability information, the method further comprises:
   receiving, by the first device, first scheduling information, wherein the first scheduling information determines a first frequency domain resource in the first range, the first frequency domain resource is used for data transmission of the first device, and the first frequency domain resource is less than or equal to the maximum aggregated spectrum.

8. The method according to claim 7, wherein after the receiving, by the first device, first scheduling information, the method further comprises:

   determining, by the first device, the first frequency domain resource based on the first scheduling information; and
   determining, by the first device, a spectrum processing resource of the first device based on the first frequency domain resource, wherein the spectrum processing resource comprises a processing resource used when the first device receives and/or sends data carried on the first frequency domain resource.

9. The method according to any one of claims 1 to 8, wherein after the sending, by the first device, the capability information, the method further comprises:

sending, by the first device, fourth indication information, wherein the fourth indication information indicates update of the capability information of the first device.

10. The method according to any one of claims 1 to 9, wherein the capability information further comprises a scaling factor, and the scaling factor is used to determine the maximum aggregated spectrum.

11. A capability information reporting method, comprising:
receiving, by a second device, capability information of a first device, wherein the capability information indicates a maximum aggregated spectrum supported by the first device in a first range.

12. The method according to claim 11, wherein the maximum aggregated spectrum is less than a first bandwidth, and the first bandwidth is a sum of maximum bandwidths of all aggregated carriers supported by the first device in the first range.

13. The method according to claim 11 or 12, wherein the capability information comprises first indication information, and the first indication information indicates the first range of the first device.

14. The method according to any one of claims 11 to 13, wherein the capability information further comprises second indication information, and the second indication information indicates a minimum guaranteed bandwidth of a carrier in the first range.

15. The method according to any one of claims 11 to 14, wherein the capability information comprises third indication information, the third indication information indicates that the first device supports scheduling of a plurality of resource units in the first range, and a sum of the plurality of resource units is less than or equal to the maximum aggregated spectrum.

16. The method according to claim 15, wherein at least one of all carriers supported by the first device in the first range comprises non-contiguous resource units.

17. The method according to any one of claims 11 to 16, wherein after the receiving, by a second device, capability information of a first device, the method further comprises:

determining, by the second device, a first frequency domain resource in the first range based on the capability information, wherein the first frequency domain resource is used for data transmission between the second device and the first device, and the first frequency domain resource is less than or equal to the maximum aggregated spectrum; and
sending, by the second device, first scheduling information to the first device, wherein the first scheduling information is used by the first device to determine the first frequency domain resource.

18. The method according to claim 17, wherein after the receiving, by a second device, capability information, the method further comprises:

receiving, by the second device, fourth indication information sent by the first device, wherein the fourth indication information indicates update of the capability information of the first device;
determining, by the second device, a second frequency domain resource based on the fourth indication information, wherein the second frequency domain resource is used for data transmission between the second device and the first device; and
sending, by the second device, second scheduling information to the first device, wherein the second scheduling information comprises information about the second frequency domain resource.

19. The method according to any one of claims 11 to 18, wherein the capability information comprises a scaling factor, and the scaling factor is used to determine the maximum aggregated spectrum.

20. A communication apparatus, comprising:

a processing unit, configured to determine capability information of the communication apparatus, wherein the capability information indicates a capability of the communication apparatus for supporting a maximum aggregated spectrum in a first range; and

a sending unit, configured to send the capability information.

21. The communication apparatus according to claim 20, wherein the maximum aggregated spectrum is less than a first bandwidth, and the first bandwidth is a sum of maximum bandwidths of all aggregated carriers supported by the communication apparatus in the first range.

22. The communication apparatus according to claim 20 or 21, wherein the capability information comprises first indication information, and the first indication information indicates the first range of the communication apparatus.

23. The communication apparatus according to any one of claims 20 to 22, wherein the capability information further comprises second indication information, and the second indication information indicates a minimum guaranteed bandwidth of a carrier of the communication apparatus in the first range.

24. The communication apparatus according to any one of claims 20 to 23, wherein the capability information comprises third indication information, the third indication information indicates that the communication apparatus supports scheduling of a plurality of resource units in the first range, and a sum of the plurality of resource units is less than or equal to the maximum aggregated spectrum.

25. The communication apparatus according to claim 24, wherein at least one of all carriers supported by the communication apparatus in the first range comprises non-contiguous resource units.

26. The communication apparatus according to any one of claims 20 to 25, wherein the communication apparatus further comprises:
a receiving unit, configured to receive first scheduling information, wherein the first scheduling information determines a first frequency domain resource in the first range, the first frequency domain resource is used for data transmission of the communication apparatus, and the first frequency domain resource is less than or equal to the maximum aggregated spectrum.

27. The communication apparatus according to claim 26, wherein the processing unit is further configured to determine the first frequency domain resource based on the first scheduling information; and
the processing unit is further configured to determine a spectrum processing resource of the communication apparatus based on the first frequency domain resource, wherein the spectrum processing resource comprises a processing resource used when the communication apparatus receives data carried on the first frequency domain resource, and/or, a processing resource used when the communication apparatus sends the data carried on the first frequency domain resource.

28. The communication apparatus according to any one of claims 20 to 27, wherein the sending unit is further configured to send fourth indication information, wherein the fourth indication information indicates update of the capability information of the communication apparatus.

29. The communication apparatus according to any one of claims 20 to 28, wherein the capability information comprises a scaling factor, and the scaling factor is used to determine the maximum aggregated spectrum.

30. A communication apparatus, comprising:
a receiving unit, configured to receive capability information of the communication apparatus, wherein the capability information indicates a maximum aggregated spectrum supported by the communication apparatus in a first range.

31. The communication apparatus according to claim 30, wherein the maximum aggregated spectrum is less than a first bandwidth, and the first bandwidth is a sum of maximum bandwidths of all aggregated carriers supported by the communication apparatus in the first range.

32. The communication apparatus according to claim 30 or 31, wherein the capability information comprises first indication information, and the first indication information indicates the first range of the communication apparatus.

33. The communication apparatus according to any one of claims 30 to 32, wherein the capability information further comprises second indication information, and the second indication information indicates a minimum guaranteed bandwidth of a carrier in the first range.

34. The communication apparatus according to any one of claims 30 to 33, wherein the capability information comprises third indication information, the third indication information indicates that the communication apparatus supports scheduling of a plurality of resource units in the first range, and a sum of the plurality of resource units is less than or equal to the maximum aggregated spectrum.

35. The communication apparatus according to claim 34, wherein at least one of all carriers supported by the communication apparatus in the first range comprises non-contiguous resource units.

36. The communication apparatus according to any one of claims 30 to 35, wherein the communication apparatus further comprises:

a processing unit, configured to determine a first frequency domain resource in the first range based on the capability information, wherein the first frequency domain resource is used for data transmission of the communication apparatus, and the first frequency domain resource is less than or equal to the maximum aggregated spectrum; and
the communication apparatus further comprises:
a sending unit, configured to send first scheduling information, wherein the first scheduling information determines the first frequency domain resource.

37. The communication apparatus according to claim 36, wherein the receiving unit is further configured to receive fourth indication information, wherein the fourth indication information indicates update of the capability information;

the processing unit is further configured to determine a second frequency domain resource based on the fourth indication information, wherein the second frequency domain resource is used for data transmission; and
the sending unit is further configured to send second scheduling information, wherein the second scheduling information comprises information about the second frequency domain resource.

38. The communication apparatus according to any one of claims 30 to 37, wherein the capability information comprises a scaling factor, and the scaling factor is used to determine the maximum aggregated spectrum.

39. A communication apparatus, wherein the apparatus comprises a processor and a memory, the memory stores a computer program, and the processor executes the computer program stored in the memory, to enable the apparatus to perform the method according to any one of claims 1 to 19.

40. A communication apparatus, comprising a processor and an interface circuit, wherein

the interface circuit is configured to receive code instructions and transmit the code instructions to the processor; and
the processor is configured to run the code instructions to perform the method according to any one of claims 1 to 19.

41. A readable storage medium, configured to store instructions, wherein when the instructions are executed, the method according to any one of claims 1 to 19 is implemented.

FIG. 1

FIG. 2

```
┌─────────────────────┐                          ┌─────────────────────┐
│   Terminal device   │                          │   Network device    │
└─────────────────────┘                          └─────────────────────┘
           │                                                 │
┌─────────────────────────┐                                 │
│ 301: Determine capability│                                 │
│       information        │                                 │
└─────────────────────────┘                                 │
           │         302: Capability information             │
           │───────────────────────────────────────────────▶│
           │                                                 │
           │                           ┌─────────────────────────────────┐
           │                           │ 303: Determine a first frequency │
           │                           │   domain resource in a first     │
           │                           │   frequency range based on the   │
           │                           │     capability information       │
           │                           └─────────────────────────────────┘
           │         304: First scheduling information       │
           │◀───────────────────────────────────────────────│
           │                                                 │
┌─────────────────────────┐                                 │
│ 305: Determine a spectrum│                                 │
│ processing resource based │                                │
│   on the first scheduling │                                │
│       information         │                                │
└─────────────────────────┘                                 │
           │        306: Fourth indication information       │
           │───────────────────────────────────────────────▶│
           │                                                 │
           │                           ┌─────────────────────────────────┐
           │                           │     307: Determine a second      │
           │                           │  frequency domain resource based │
           │                           │    on the fourth indication      │
           │                           │          information             │
           │                           └─────────────────────────────────┘
           │       308: Second scheduling information         │
           │◀───────────────────────────────────────────────│
           │                                                 │
┌─────────────────────────────┐                             │
│ 309: Determine a second spectrum│                         │
│  processing resource based on the│                        │
│    second scheduling information │                         │
└─────────────────────────────┘                             │
           │                                                 │
```

FIG. 3

| Second terminal device | First terminal device | Network device |
|---|---|---|

**401: Determine capability information**

402: Capability information →

**403: Determine a first frequency domain resource in a first frequency range based on first capability information**

← 404: First scheduling information

**405: Determine a spectrum processing resource based on the first scheduling information**

406: Target capability information →

**407: Determine a target spectrum processing resource based on the target capability information**

408: Fourth indication information →

**409: Determine a second frequency domain resource based on the fourth indication information**

← 410: Second scheduling information

**411: Determine a second spectrum processing resource based on the second scheduling information**

FIG. 4

FIG. 5

Total spectrum that can be processed
100 MHz

Band A
100 MHz

Band B
100 MHz

Carrier 1
40 MHz contiguous
spectrum

Carrier 2
60 MHz contiguous
spectrum

FIG. 6

Total spectrum that can be processed
100 MHz

Band A
100 MHz

Carrier 1
40 MHz non-contiguous spectrum

Band B
100 MHz

Carrier 2
60 MHz non-contiguous spectrum

FIG. 7

Total supported bandwidth

Band A
Minimum guaranteed
bandwidth of the carrier

Band B
Minimum guaranteed
bandwidth of the carrier

All carriers in bands
A and B take effect

Band A
Maximum supported
bandwidth of the carrier

Band B
Maximum supported
bandwidth of the carrier

Only the carrier in the
band A takes effect

Band A
Maximum supported bandwidth of the carrier

FIG. 8

t1               t2              t3             t4

Configure/activate only a Uu link ← → | ← Configure/activate both the Uu link and the sidelink → | ← Configure/activate only a sidelink →

Maximum bandwidth 100 MHz of the Uu link ← → | ← Maximum bandwidth 70 MHz of the Uu link → | ← Maximum bandwidth 40 MHz of the sidelink →

Maximum bandwidth 30 MHz of the sidelink ← →

FIG. 9

EP 4 145 745 A1

| 1001 | | 1002 |
|---|---|---|
| Sending unit | | Processing unit |

FIG. 10

| 1101 | 1102 | 1103 |
|---|---|---|
| Sending unit | Processing unit | Receiving unit |

FIG. 11

| 1201 |
|---|
| Receiving unit |

FIG. 12

| 1301 | 1302 | 1303 |
|---|---|---|
| Sending unit | Processing unit | Receiving unit |

FIG. 13

Memory — 1410

1440 —

1420 —

Processor

Receiving unit

Capability determining unit

Scheduling unit

1441 —

1442

1430 —

1443 — Processing unit

Sending unit

FIG. 14

1501 —

1502 —

Processor

Receiving unit

Sending unit

1503 —

FIG. 15

<div align="center">

**INTERNATIONAL SEARCH REPORT**

</div>

| | International application No. |
|---|---|
| | **PCT/CN2021/093766** |

| A. | CLASSIFICATION OF SUBJECT MATTER |
|---|---|
| | H04L 5/00(2006.01)i |

According to International Patent Classification (IPC) or to both national classification and IPC

| B. | FIELDS SEARCHED |
|---|---|

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 能力, 上报, 频谱, 聚合, capability, reporting, spectrum, aggregation

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108234091 A (CHINA MOBILE COMMUNICATION GROUP TERMINAL CO., LTD. et al.) 29 June 2018 (2018-06-29) description, paragraphs [0014]-[0047] | 1-41 |
| X | CN 101888646 A (CHINA MOBILE COMMUNICATIONS GROUP CO., LTD.) 17 November 2010 (2010-11-17) description, paragraphs [0007]-[0023] | 1-41 |
| A | CN 108934005 A (VIVO COMMUNICATION TECHNOLOGY CO., LTD.) 04 December 2018 (2018-12-04) entire document | 1-41 |
| A | US 2013329665 A1 (QUALCOMM INC.) 12 December 2013 (2013-12-12) entire document | 1-41 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 July 2021** | **12 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093766**

| Patent document cited in search report | | | Publication date (day/month/year) | Patent family member(s) | | | Publication date (day/month/year) |
|---|---|---|---|---|---|---|---|
| CN | 108234091 | A | 29 June 2018 | None | | | |
| CN | 101888646 | A | 17 November 2010 | None | | | |
| CN | 108934005 | A | 04 December 2018 | WO | 2018219099 | A1 | 06 December 2018 |
| | | | | US | 2021099859 | A1 | 01 April 2021 |
| | | | | EP | 3644542 | A1 | 29 April 2020 |
| | | | | US | 2020112853 | A1 | 09 April 2020 |
| US | 2013329665 | A1 | 12 December 2013 | KR | 20150032694 | A | 27 March 2015 |
| | | | | IN | 2354MUN2014 | A | 14 August 2015 |
| | | | | EP | 2859665 | A1 | 15 April 2015 |
| | | | | CN | 104365031 | A | 18 February 2015 |
| | | | | WO | 2013188561 | A1 | 19 December 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010421049X

**Non-patent literature cited in the description**

- *3GPP NR 38.101*